(19) Europäisches Patentamt
European Patent Office
Office européen des brevets

(11) Publication number: **0 538 801 A1**

# (12) EUROPEAN PATENT APPLICATION

(21) Application number: **92117939.6**

(51) Int. Cl.[5]: **C08F 2/00**

(22) Date of filing: **20.10.92**

(30) Priority: **21.10.91 JP 302291/91**
**06.12.91 JP 349138/91**
**27.12.91 JP 359428/91**

(43) Date of publication of application:
**28.04.93 Bulletin 93/17**

(84) Designated Contracting States:
**BE DE ES FR GB GR IT NL PT SE**

(71) Applicant: **SHIN-ETSU CHEMICAL CO., LTD.**
**6-1, Ohtemachi 2-chome**
**Chiyoda-ku Tokyo(JP)**

(72) Inventor: **Shimizu, Toshihide**
**E-702, 3-3 Tomioka**
**Urayasu-shi, Chiba-ken(JP)**
Inventor: **Watanabe, Mikio**
**Yushi-ryo, 3-3-24, Shittechuo, Kamisumachi**
**Kashima-gun, Ibaraki-ken(JP)**

(74) Representative: **von Füner, Alexander, Dr. et al**
**Patentanwälte v. Füner, Ebbinghaus, Finck**
**Mariahilfplatz 2 & 3**
**W-8000 München 90 (DE)**

## (54) Polymer scale preventive agent, polymerization vessel effective in preventing polymer scale deposition, and process of producing polymer using said vessel.

(57) A polymer scale preventive agent for use in polymerization of a monomer having an ethylenically unsaturated double bond, comprising a condensation product obtained by condensing:

(A) an aromatic amine compound, and

(B) an aromatic nitro compound

in an organic solvent-based medium. This agent is used for forming a coating on the inner wall, etc. of a polymerization vessel. Such a vessel is effective in preventing polymer scale deposition not only on the areas in the liquid phase but also in the vicinity of the interface between the gas and liquid phases in the polymerization vessel and useful in producing a polymer that shows very few fish eyes and good whiteness when formed into sheets or the like.

EP 0 538 801 A1

## BACKGROUND OF THE INVENTION

### 1. Field of the Invention

The present invention relates to a polymer scale preventive agent useful in polymerization of a monomer having an ethylenically unsaturated double bond, a polymerization vessel effective in preventing polymer scale deposition, and a process of producing a polymer using said vessel.

### 2. Description of the Prior Art

As a method of polymerizing a monomer having an ethylenically unsaturated double bond, are known suspension polymerization, emulsion polymerization, solution polymerization, gas phase polymerization and bulk polymerization. In any type of the polymerizations, polymer scale is liable to be deposited on the areas with which the monomer come into contact during polymerization, such as inner walls, stirring equipment and so on of a polymerization vessel.

The deposition of the polymer scale on the inner wall results in disadvantages that the yield of the polymer and cooling capacity of the polymerization vessel are lowered; that the polymer scale may peel and mix into a polymeric product, thereby impairing the quality thereof; and that removal of such polymer scale is laborious and hence time-consuming. Further, since the polymer scale contains unreacted monomers and operators may be exposed thereto, which may cause physical disorders in the operators.

Heretofore, as a method for preventing polymer scale deposition on the inner wall and so forth, methods by which a polymer scale preventive agent comprising an amine compound, quinone compound, aldehyde compound or the like is coated on the inner wall, etc. of a polymerization vessel or methods by which such compounds are added to an aqueous medium for polymerization (Japanese Patent Publication (KOKOKU) No. 45-30343 (1970)).

These methods can prevent the deposition of polymer scale if polymerization run is repeated within about 5 or 6 times; however, the number of repetition of polymerization run exceeds 5 or 6, the scale preventive effect is weakened. That is, the scale preventive effect is poor in durability. Particularly, the scale preventive effect is adversely affected where a water-soluble catalyst is used and unsatisfactory industrially.

To overcome the disadvantages, it is proposed in Japanese Patent Publication (KOKAI) No. 60-30681 (1985) to form a coating of a condensation product of an aromatic amine compound and an aromatic nitro compound on the areas with which monomers come into contact, such as the inner wall of a polymerization vessel. The condensation product is produced by condensing an aromatic amine compound and an aromatic nitro compound in the presence of a catalyst and a mineral acid. The formation of the coating of such a condensation product enables repetition of about 100 to 200 polymerization runs without deposition of polymer scale on the areas in the liquid phase, i.e., under the liquid surface inside the polymerization vessel.

However, if the coating of the condensation product of an aromatic amine compound and aromatic nitro compound of the above Japanese Patent Publication (KOKAI) No. 60-30681 (1985) is formed on the inner wall of a polymerization vessel or the like, polymer scale deposition is liable to occur in the vicinity of the interface between the gas phase and the liquid phase which is located at the upper section of the polymerization vessel.

Once polymer scale is deposited in the vicinity of the interface between the gas phase and the liquid phase, the deposited scale will grow gradually as polymerization runs are repeated, and at last it is peeled from the inner wall, etc. and incorporated into the polymeric product. If the polymeric product containing the polymer scale is processed into- formed products such as sheets or the like, the polymer scale causes increase in fish eyes in the formed products, lowering seriously the quality thereof.

Polymeric products obtained by polymerization are required to have a high whiteness. That is, when a polymeric product is formed into a sheet or the like without any addition of a coloring agent, the resulting formed product is more or less colored. Such coloration is called initial coloration, which is desired to be as low as possible. However, the coating comprising said condensation product of an aromatic amine compound and an aromatic nitro compound may be peeled or dissolved into a polymeric product, thereby lowering the whiteness or increasing the initial coloration thereof.

## SUMMARY OF THE INVENTION

It is accordingly an object of the present invention to provide a polymer scale preventive agent that can prevent effectively the deposition of polymer scale not only in the areas in the liquid phase but also in the

vicinity of the interface between the gas and liquid phases, and can produce polymeric products with a very small number of fish eyes and low initial coloration after processed into formed products such as sheets or the like in polymerizing a monomer having an ethylenically unsaturated double bond, a polymerization vessel using the same, and a process of producing a polymer using the vessel.

Thus, the present invention provides, as a means of achieving the above object, a polymer scale preventive agent for use in polymerization of a monomer having an ethylenically unsaturated double bond, comprising a condensation product obtained by condensing reactants comprising:

(A) an aromatic amine compound, and
(B) an aromatic nitro compound

in an organic solvent-based medium.

The present invention also provides a polymerization vessel for use in polymerization of a monomer having an ethylenically unsaturated double bond, having on its inner wall surfaces a polymer scale preventive coating, wherein said coating comprises a condensation product obtained by condensing reactants comprising:

(A) an aromatic amine compound, and
(B) an aromatic nitro compound

in an organic solvent-based medium.

Further, the present invention provides a process of producing a polymer of an ethylenically unsaturated double bond, which comprises polymerizing the monomer in a polymerization vessel having a polymer scale preventive coating on its inner wall surfaces, wherein said coating comprises a condensation product obtained by condensing reactants comprising:

(A) an aromatic amine compound, and
(B) an aromatic nitro compound

in an organic solvent-based medium.

According to the present invention, deposition of polymer scale can be effectively prevented not only on the areas in the liquid phase but also in the vicinity of the interface between the gas and liquid phases in a polymerization vessel. Therefore, the present invention makes it unnecessary to conduct the operation of removing the polymer scale after every polymerization run, and the productivity is thereby improved.

Further, when the polymeric product obtained by the application of the present invention is processed into formed products such as sheets, the resulting formed products have very few fish eyes.

More, said formed products have good initial coloration. That is, the formed products exhibit a luminosity index L in the Hunter's color difference equation described in JIS Z 8730(1980) of 70 or more in the case of vinyl chloride polymer, or 80 or more in the case of SBR, for instance.

## DETAILED DESCRIPTION OF PREFERRED EMBODIMENTS

### (A) Aromatic amine compound

The aromatic amine compound (A) is represented, for example, by the general formulas (1), (2) and (3):

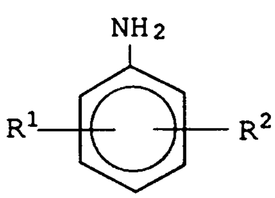

(1)

wherein $R^1$ stands for -H, $-NH_2$, -Cl, -OH, $-NO_2$, $-COCH_3$, $-OCH_3$, $-N(CH_3)_2$ or an alkyl group having 1 to 3 carbon atoms, and $R^2$ stands for -H, $-NH_2$, -OH, $-CH_3$, -COOH or $-SO_3H$.

Specifically, the compounds of the general formula (1) include, for example, aniline, o-, m- or p-phenylenediamine, o-, m- or p-aminophenol, o-, m- or p-chloroaniline, o-, m- or p-nitroaniline, o-, m- or p-methylaniline, N,N-dimethylparaphenylenediamine, 4-chloro-o-phenylenediamine, 4-methoxy-o-phenylenediamine, 2-amino-4-chlorophenol, 2,3-diaminotoluene, 5-nitro-2-aminophenol, 2-nitro-4-aminophenol, 4-nitro-2-aminophenol, o-, m- or p-aminosalicylic acid. Among these compounds, preferred are o-,m- or p-aminophenol, 5-nitro-2-aminophenol, 2-nitro-4-aminophenol, 4-nitro-2-aminophenol, o-, m- or p-aminosalicylic acid.

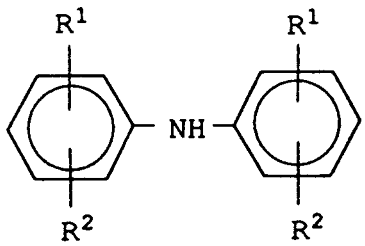

(2)

wherein the two $R^1$ may be the same or different and are each as defined above, and the two $R^2$ may be the same or different and are each as defined above.

Specifically, the compounds of the general formula (2) include, for example, diphenylamines such as 4-aminodiphenylamine, 2-aminodiphenylamine, 4,4'-diaminodiphenylamine, 4-amino-3'-methoxydiphenylamine, 4-amino-4'-hydroxydiphenylamine and the like. Among the compounds, preferred are 4-aminodiphenylamine, 2-aminodiphenylamine and 4,4'-diaminodiphenylamine.

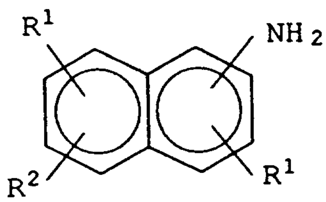

(3)

wherein the two $R^1$ may be the same or different and are each as defined above, and $R^2$ is as defined above.

Specifically, the compounds of the general formula (3) include, for example, α-naphthylamine, β-naphthylamine, 1,5-diaminonaphthalene, 1-amino-5-hydroxynaphthalene, 1,8-diaminonaphthalene, 2,3-diaminonaphthalene and the like. Among these compounds, preferred are α-naphthylamine, 1,5-diaminonaphthalene, 1,8-diaminonaphthalene, and 2,3-diaminonaphthalen.

The above aromatic amine compounds can be used singly or in combination of two or more.

(B) Aromatic nitro compound

The aromatic nitro compound (B) is, for example, expressed by the general formula (4) as below.

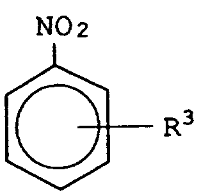

(4)

wherein the $R^3$ stands for -H, -Cl, -OH, $-OCH_3$, $-OC_2H_5$, - COOH or $-SO_3H$.

Specifically, the compounds of the general formula (4) include, for example, nitrobenzene, o-, m- or p-hydroxynitrobenzene, o-, m- or p-nitroanisole, o-, m- or p-chloronitrobenzene, o-, m- or p-nitrobenzoic acid, o-, m- or p-nitrobenzenesulfonic acid

Condensation reaction

The condensation products of an aromatic amine compound (A) and an aromatic nitro compound (B) can be produced by reacting them in an organic solvent-based medium, optionally in the presence of a catalyst, normally at room temperature to 200 °C for 0.5 to 150 hours, preferably at room temperature to 150 °C for 3 to 50 hours. In this process, normally there is no need to add any other condensation catalysts, because the aromatic nitro compound also acts as a condensation catalyst.

The catalyst suitable for the reaction, which may be optionally add it, includes, for example, azo compounds such as α,α'-azobisisobutyrontrile and α,α'-azobis-2,4-dimethylvaleronitrile, an elemental or molecular halogen such as iodine, bromine and chlorine, and peroxides such as hydrogen peroxide, sodium peroxide, benzoyl peroxide, potassium persulfate, ammonium persulfate, peracetic acid, cumene hydroperoxide, perbenzoic acid and p-menthane hydroperoxide, oxyacids or salts thereof such as iodic acid, periodic acid, potassium periodate and sodium perchlorate.

The organic solvent-based medium used as a medium for the above condensation reaction herein includes an organic solvent and a mixed solvent of an organic solvent compatible with water and water. In the case of using a mixed solvent the content of the organic solvent in the mixed solvent is preferably 20% by weight or more, more preferably 50 % by weight or more. The usable organic solvents include, e.g., alcohols, ketones and esters. Among them the organic solvents compatible with water include, for example, alcohols such as methanol, ethanol and propanol, ketones such as acetone, methyl ethyl ketone, and the like, and esters such as methyl acetate and ethyl acetate.

The pH value of the organic solvent-based medium is normally in the range from 1 to 13, any pH adjustor can be used for this purpose. The aromatic nitro compound (B) is preferably used in an amount of 0.01 to 1.50 parts by weight, more preferably from 0.1 to 0.7 parts by weight, per part by weight of the aromatic amine compound (A), although it depends on the kinds of the aromatic amine compound and the aromatic nitro compound, composition of reaction mixture, reaction temperature and reaction time, etc. If the amount of the aromatic nitro compound (B) is too small or too large relative to that of the component (A), the resulting condensation product is poor in prevention of polymer scale.

Further, if an aromatic hydroxy compound (C) is added to a reaction mixture at the time of condensation reaction of the aromatic amine compound (A) and the aromatic nitro compound (B), a condensation product that can further improve the polymer scale preventive effect is obtained. Also using a polymer scale preventive agent comprising such a condensation product for polymerization reaction, a resulting polymeric product has lower initial coloration processed into formed products such as sheets.

(C) Aromatic hydroxy compound

The terminology "the condensation product of the conponents (A) and (B)" covers, as a preferred embodiment, condensation products of the components (A), (B) and (C).

The aromatic hydroxy compound (C) is, for example, expressed by the general formulas (5) and (6) as below:

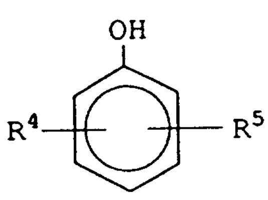

(5)

wherein $R^4$ stands for -H, -Cl, -OH, $-COCH_3$, $-OCH_3$, -COOH, $-SO_3H$ or an alkyl group having 1 to 3 carbon atoms, and $R^5$ stands for -H, -Cl, -OH, $-OCH_3$, $-OC_2H_5$ or -COOH.

Specifically, the compounds of the general formula (5) include, for example, phenols such as phenol, hydroquinone, resorcinol, catechol, hydroxyhydroquinone, pyrogallol, o-, m- or p-chlorophenol, o-, m- or p-hydroxybenzoic acid, 2,4-dihydroxybenzoic acid, 2,5-dihydroxybenzoic acid, 2,6-dihydroxybenzoic acid, 3,4-dihydroxybenzoic acid, 3,5-dihydroxybenzoic acid, 2,5-, 2,6- or 3,5-dihydroxytoluene and the like. Among them, hydroquinone, resorcinol, catechol, hydroxyhydroquinone, o-, m- or p-hydroxybenzoic acid, and pyrogallol are preferable.

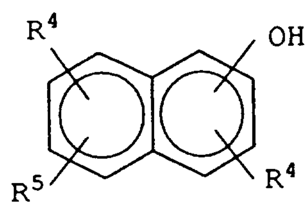

(6)

wherein the two $R^4$ may be the same or different and are each as defined above and $R^5$ is as defined above.

Specifically, the compounds of the general formula (6) include, for example, naphthols and their derivatives such as $\alpha$-naphthol, $\beta$-naphthol, 1,3-, 1,4-, 1,5-, 2,3-, 2,6- or 2,7-dihydroxynaphthalene, 1-hydroxy-2-naphthoic acid, 3-hydroxy-2-naphthoic acid and the like. Among them, preferred are $\alpha$-naphthol, $\beta$-naphthol, and 1,3- or 2,7-dihydroxynaphthalene.

The above aromatic hydroxy compounds can be used single or in combination of two or more.

Although the addition of the aromatic hydroxy compound (C) to a reaction solution may be begun before the start of the condensation reaction of the components (A) and (B), it is preferred to add it after the start of the condensation reaction of the components (A) and (B). More preferably, the component (C) is added to the reaction mixture just before a condensation product of the components (A) and (B) precipitates, that is, at the time when the condensation conversion of the components (A) and (B) reaches a value in the range of 50 to 99% by weight, particularly in the range of 70 to 95% by weight, although the desirable time depends on the kinds of the components (A) and (B), reaction rate, etc. After the completion of the addition of the component (C), the reaction is normally continued for from 2 to 50 hours.

Condensation conversion of the components (A) and (B) herein means the amount in % by weight of the components (A) and (B) consumed for condensation based on the total amount of the components (A) and (B) charged as monomers. That is, condensation conversion is defined by the equation:

Condensation conversion (% by weight) = $[(a-b)/a] \times 100$

wherein a stands for the total amount in part(s) by weight of the components (A) and (B) charged as a monomer, and b stands for the amount in part(s) by weight of the unreacted components (A) and (B), so that (a-b) parts by weight is the amount of the components consumed for the condensation reaction.

It normally takes 0.2 to 100 hours for the condensation conversion of the components (A) and (B) to reach 50 to 99% by weight, although the time depends on the kinds of the components (A) and (B), etc.

Although time required for the entire condensation reaction depends on the kinds of the aromatic amine compound (A), the aromatic nitro compound (B) and the aromatic hydroxy compound (C), reaction temperature, and the time when the hydroxy compound (C) is added, it normally takes 0.5 to 200 hours at room temperature to 200 °C, preferably 5 to 100 hours at room temperature to 150 °C.

Although the amount of the aromatic hydroxy compound (C) to be added depends on the kinds of the aromatic amine compound, the aromatic nitro compound and the aromatic hydroxy compound, the composition of reaction mixture, reaction temperature, reaction time, etc., the aromatic hydroxyl compound (C) is preferably used in an amount of 0.05 to 20.0 parts by weight, more preferably 0.1 to 10 parts by weight per part by weight of the aromatic amine compound (A). If the amount of the aromatic hydroxy compound (C) is too small relative to that of the component (A), a polymeric product that is poor in initial coloration is obtained when the resulting condensation product is used as a polymer scale preventive agent. If the amount is too large, the scale preventive effect is lowered.

Among the above condensation products that are effective components for a polymer scale preventive agent of this invention, preferred condensation products are as below.

(I) A condensation product obtained using an aromatic amine compound expressed by the general formula (1) as the component (A) and using an aromatic hydroxy compound expressed by the general formula (6) as the component (C);

(II) A condensation product obtained using an aromatic amine compound expressed by the general formula (2) as the component (A) and using an aromatic hydroxy compound expressed by the general formula (5) as the component (C);

(III) A condensation product obtained using an aromatic amine compound expressed by the general formula (2) as the component (A) and the using an aromatic hydroxy compound expressed by the general formula (6) as the component (C);

(IV) A condensation product obtained using an aromatic amine compound expressed by the general formula (2) as the component (A) and using an aromatic hydroxy compound expressed by the general formula (5) and an aromatic hydroxy compound expressed by the general formula (6) in combination as the component (C);

(V) A condensation product obtained using an aromatic amine compound expressed by the general formula (3) as the component (A) and using an aromatic hydroxy compound expressed by the general formula (5) as the component (C); and

(VI) A condensation product obtained using an aromatic amine compound expressed by the general formula (2) and an aromatic amine compound expressed by the general formula (3) in combination as

the component (A) and using an aromatic hydroxy compound expressed by the general formula (5) as the component (C). In all of (I) to (VI) above, the component (B) is an aromatic nitro compound expressed by the general formula (4).

Among (I) to (VI), preferred are the condensation products of (II), (V) and (VI).

(D) Reaction stopper

In a preferred embodiment, (D) a reaction stopper is added to the reaction mixture at an suitable time during the condensation reaction of the components (A) and (B), so that further progress of the condensation is controlled and the degree of condensation is controlled. This is because if the condensation product of the components (A) and (B) has too high a degree of condensation, when it is dissolved in a solvent to prepare a coating liquid described later, it may form sedimentation and the coating liquid obtained is not uniform, thereby lowering the scale preventing effect. The addition of the component (D) makes it possible to store the condensation product of the components (A) and (B) for a long time.

As the reaction stopper (D), for instance, a reducing agent is used. The reducing agent includes, for example, hydrogen, hydrogen iodide, hydrogen bromide, hydrogen sulfide, hydrides such as lithium aluminum hydride, sodium borohydride, calcium borohydride, zinc borohydride, tetraalkylammonium borohydride, trichlorosilane, triethylsilane, and the like, lower oxides or lower oxyacids such as carbon monoxide, sulfur dioxide, sodium thiosulfate, sodium thiosulfite, sodium sulfite, potassium sulfite, sodium bisulfite, and sodium hydrosulfite, sulfur compounds such as Rongalit, sodium sulfide, sodium polysulfide, and ammonium sulfide, alkali metals such as sodium and lithium, metals that are electrically highly positive such as magnesium, calcium, aluminum and zinc and their amalgams, salts of metals in a lower valence state such as iron(II) sulfate, tin(II) chloride, titanium(III) trichloride, and the like, phosphorus compounds such as phosphorus trichloride, phosphorus triiodide, trimethylphosphine, triphenylphosphine, trimethylphosphite, and hexamethylphosphorus triamide, hydrazine, diborane, and substituted diboranes such as ethane-1,2-diaminoborane, dimethylamine-borane, and pyridine-borane. Among these compounds, preferred are hydrogen iodide, hydrogen bromide, sodium borohydride, sulfur dioxide, sodium thiosulfate, sodium thiosulfite, sodium sulfite, potassium sulfite, sodium bisulfite and Rongalit.

The reaction stoppers above can be used singly or in combination of two or more.

The component (D) is preferably added to the reaction mixture after the condensation reaction of the components (A) and (B) is initiated, and more preferably the component (D) is added to the reaction mixture just before a condensation product of the components (A) and (B) precipitates. In the case of using the component (C) as a condensation component, the component(D) should be added to the reaction mixture after the addition of the component (C), preferably at the time just before a condensation product of the components (A), (B) and (C) precipitates. The specific timing for "just before a condensation product of the components (A) and (B) precipitates" is described above in regard to the addition of the component (C). Specifically when a component (C) is added, the component (D) is preferably added to the reaction mixture when the condensation conversion of the components (A), (B) and (C) has reached a value in the range of 50 to 99% by weight, particularly 70 to 95% by weight. After the completion of the addition of the component (D), reaction is normally stopped or continued for up to 30 hours.

Condensation conversion of the components (A) and (B) is as defined above, and condensation conversion of the components (A), (B) and (C) herein means the total amount in % by weight of the components (A), (B) and (C) consumed for the condensation based on the total amount of the components (A), (B) and (C) charged as monomers. That is, condensation conversion of the components (A), (B) and (C) is defined by the equation:

$$\text{Condensation conversion (\% by weight)} = [(c-d)/c] \times 100$$

wherein c stands for the total amount in part(s) by weight of the components (A), (B) and (C) charged as monomers, and d stands for the total amount in part(s) by weight of the unreacted components (A), (B) and (C).

It normally takes 0.2 to 100 hours for the condensation conversion of the components (A), (B) and (C) to reach 50 to 99% by weight, although the time depends on the kinds of the components (A), (B) and (C), etc.

Where the reaction stopper (D) is added to the reaction mixture, the preferred amount of the component (D) is in the range of 0.01 to 2 parts by weight per part by weight of the components (A) and (B) in total when the addition is performed during condensation reaction of the components (A) and (B), and in the range of 0.005 to 1 part by weight per part by weight of the components (A), (B) and (C) in total.

The polymer scale preventive agent comprising the condensation product of the components (A) and (B) is used for forming a coating on, for example, the inner wall surfaces of a polymerization vessel, and the deposition of polymer scale is thereby prevented. To form such a coating, the polymer scale preventive agent is used in a liquid state, specifically as a solution or a dispersion. That is, it is used as a coating liquid.

Preparation of coating liquid

For example, the coating liquid mentioned above may be prepared by adding a solvent described below as required to a reaction solution containing the condensation product of the components (A) and (B) resulting from the condensation reaction. Alternatively, the coating liquid may be prepared by removing the solvent from the solution containing the condensation product resulting from the condensation reaction, grinding the resulting solid condensation product, adding a solvent described below to the ground product obtained. Alternatively, it may be prepared by adding the ground condensation product mentioned above into a cold water to allow the condensation product to form sediment, filtering off and drying the sediment, and adding a solvent described below to the dried sediment.

Solvents to be used for preparation of the coating liquid include, for example, water; alcohols such as methanol, ethanol, propanol, butanol, 2-butanol, 2-methyl-1-propanol, 2-methyl-2-propanol, 3-methyl-1-butanol, 2-methyl-2-butanol, 2-pentanol, etc.; ketones such as acetone, methyl ethyl ketone, methyl isobutyl ketone, etc.; esters such as methyl formate, ethyl formate, methyl acetate, ethyl acetate, methyl acetoacetate, etc.; ethers such as 4-methyldioxolane, ethylene glycol diethyl ether, etc.; furans such as tetrahydrofuran, furfural, furfuryl alcohol, and tetrahydrofurfuryl alcohol; and aprotic solvents such as acetonitrile, dimethylformamide and dimethyl sulfoxide. These solvents may be used singly or as a mixed solvent of two or more thereof in a case-by-case basis.

Among the solvents above, particularly preferred are water, and mixed solvents of water and an organic solvent compatible with water. The organic solvent compatible with water includes, for example, alcohols such as methanol, ethanol and propanol, ketones such as acetone and methyl ethyl ketone, and esters such as methyl acetate and ethyl acetate. The mixed solvents of water and an organic solvent compatible with water preferably contains the organic solvent in such an amount that there is no fear about ignition or explosion and safety in handling is ensured as to virulence, etc. Specifically, the amount of the organic solvent is preferably 50% by weight or less, and more preferably 30% by weight or less.

In the case where water or a mixed solvent of water and an organic solvent compatible with water is used for the solvent for a coating liquid, the coating liquid is preferably alkaline, and the polymer scale preventing effect is thereby enhanced. This is presumably because alkalization of the coating liquid increases the solubility of the condensation product of the components (A) and (B) in the solvent and makes the coating liquid uniform. The coating liquid preferably has a pH of 7.5 to 13.5, and more preferably 8.0 to 12.5. As an alkaline compound to be used for adjusting pH, for example, alkali metal compounds such as LiOH, NaOH, KOH, $Na_2CO_3$, $Na_2HPO_4$, $NH_4OH$ and the like, ammonium compounds, and organic amine compounds such as ethylenediamine, monoethanolamine, triethanolamine and the like, can be used.

The concentration of the condensation product of the components (A) and (B) is not limited as long as a total coating weight described later can be obtained. Normally, the concentration is in the range of about 0.001 to about 15% by weight, preferably 0.01 to 5% by weight.

In order to further enhance the scale preventive effect, to the coating liquid described above is preferably added (E) a water-soluble polymeric compound and/or (F) at least one compound selected from the group consisting of a colloidal silica and an alkali metal silicate. More preferably, the (E) and (F) are used in combination. Presumably, these additives interact with the condensation product of the components (A) and (B), so that the component (E) improves hydrophilic nature of the surface of the coating and the component (F) increases the adhesion of the coating to the inner wall, etc. of the polymerization vessel.

(E) Water-soluble polymeric compound

The water-soluble polymeric compounds include, for example, amphoteric polymeric compounds such as gelatin and casein, anionic polymeric compounds such as polyacrylic acid, polystyrenesulfonic acid, carboxymethyl cellulose, and alginic acid, cationic polymeric nitrogen-containing polymeric compounds such as polyvinylpyrrolidone and polyacrylamide, hydroxyl-containing polymeric compounds such as polyvinyl alcohol, hydroxyethyl cellulose, hydroxypropyl cellulose and pectin.

Among the water-soluble polymeric compounds above, preferred are gelatin, casein, polyacrylic acid, carboxymethyl cellulose, polyvinylpyrrolidone and pectin.

The amount of the water-soluble polymeric compound (E) is preferably in the range of 0.01 to 10 parts by weight, and more preferably from 0.05 to 2 parts by weight per part by weight of the condensation product of the components (A) and (B).

(F) At least one compound selected from the group consisting of colloidal silica and alkali metal silicate

Colloidal silica is a colloid in which ultrafine particles of silicon dioxide (silica) are dispersed in an aqueous medium or a non-aqueous medium such as methanol, propanol, ethylene glycol, or the like. The colloidal particles generally have a particle diameter of 1 to 100 mμ.

It is well-known that colloidal silica, for example, dispersed in an aqueous medium can be typically produced by adding hydrochloric acid to an aqueous sodium silicate solution, but production methods are not limited thereto. Any production methods can be used as long as the colloidal silica described above is produced.

The silicates of alkali metals include, for example, metasilicates ($M_2SiO_3$), orthosilicates ($M_4SiO_4$), bisilicates ($M_2Si_2O_3$), trisilicates ($M_3Si_3O_7$) and sesquisilicates ($M_4Si_3O_{10}$) of alkali metals such as lithium, sodium and potassium (where M stands for an alkali metal such as lithium, sodium or potassium), and water glass.

The amount of the component (F) is preferably in the range of 0.01 to 10 parts by weight, more preferably from 0.05 to 5 parts per part by weight of the condensation product of the components (A) and (B).

The water-soluble polymeric compound (E) may be added without any component (F), but it is preferably combined with the colloidal silica or the alkali metal silicate. Where the water-soluble polymeric compound is used in combination with the colloidal silica, the colloidal silica is used in an amount of preferably 5 to 3,000 parts by weight, more preferably 50 to 1,000 parts by weight per 100 parts by weight of the water-soluble polymeric compound. Where the water-soluble polymeric compound is used in combination with the alkali metal silicate, the alkali metal silicate is used in an amount of preferably 5 to 3,000 parts by weight, more preferably 50 to 1,000 parts by weight per 100 parts by weight of the water-soluble polymeric compound.

Formation of the coating

The polymer scale preventive liquid is applied to the inner walls of a polymerization vessel and then dried sufficiently at a temperature from room temperature to 100°C, for instance, followed by washing with water if necessary, to form the coating.

The polymer scale preventive liquid is preferably applied to not only the inner wall surfaces of a polymerization vessel but also other areas with which the monomer comes into contact during polymerization to form the coating on such areas. For example, on a stirring shaft, stirring blades, condensers, headers, search coil, bolts, nuts, etc.

More preferably, for formation of the coating, the polymer scale preventive liquid is applied to areas with which monomers does not come into contact during polymerization but on which polymer scale may deposit, for example, the areas with which unreacted monomers comes into contact of an unreacted monomer recovery system; specifically the inner surfaces, etc. of equipment and pipes of the recovery system. Specifically, such areas include the inner surfaces of monomer distillation columns, condensers, monomer stock tanks and valves.

The method of applying the coating solution is not particularly limited, and includes, for example, the brush coating, spray coating, the method of filing the polymerization vessel with the coating solution followed by withdrawal thereof, and automatic coating methods as disclosed in Japanese Pre-examination Patent Publication (KOKAI) Nos. 57-61001(1982) and 55-36288(1980), and Japanese Patent Publication (KOHYO) Nos. 56-501116(1981) and 56-501117(1981), and Japanese Pre-examination Publication (KOKAI) No. 59-11303(1984), etc.

The method of drying wet coated surfaces provided by application of the polymer scale preventive liquid, is not limited, either. Following methods can be used. That is, a method in which, after the solution is applied, hot air with an suitable elevated temperature is blown to the coated surface, and a method in which the inner wall surface of a polymerization vessel and the surfaces of other parts to be coated are previously heated to from 30 to 80°C, and the polymer scale preventive liquid is directly applied to the heated inner wall surfaces, etc. After dried, the coated surfaces are washed with water if necessary.

The coating thus obtained normally has a coating weight of normally 0.001 g/m$^2$ to 5 g/m$^2$, and preferably from 0.05 to 2 g/m$^2$.

The coating operation may be conducted every one to ten-odd batches of polymerization. The formed coating has good durability and retains the scale-preventing action; therefore the coating operation may be performed every several batches of polymerization. Thus, the polymerization vessel can be used repeatedly without deposition of polymer scale, and productivity is improved.

Polymerization

After the formation of the coating on the inner wall surfaces of a polymerization vessel, and preferably other parts with which monomer may come into contact during polymerization, polymerization is carried out in accordance with conventional procedures. That is, a monomer having an ethylenically unsaturated double bond, a polymerization initiator, and optionally a polymerization medium such as water, etc., a suspending agent, a solid dispersing agent, a dispersing agent such as nonionic or anionic surfactants are charged into the polymerization vessel, followed by carrying out polymerization according to conventional methods.

The monomer having an ethylenically unsaturated double bond to which this invention can be applied may include, for example, vinyl halides such as vinyl chloride; vinyl esters such as vinyl acetate and vinyl propionate; acrylic acid, methacrylic acid, and esters or salts thereof; maleic acid, fumaric acid, and esters or salts thereof; and diene monomers such as butadiene, chloroprene and isoprene; styrene, acrylonitrile, vinylidene halides such as vinylidene chloride, and vinyl ethers. These may be used singly or in combination of two or more.

There are no particular limitations on the type of polymerization to which this invention can be applied. The present invention is effective in any type of polymerization such as suspension polymerization, emulsion polymerization, solution polymerization, bulk polymerization, and gas phase polymerization. Particularly, the present invention is more suitable to polymerizations in an aqueous medium such as suspension or emulsion polymerization.

In the following, general conditions are described on each type of polymerizations.

In the case of suspension or emulsion polymerization, first, water and a dispersing agent are charged into a polymerization vessel, and thereafter a polymerization initiator is charged. Subsequently, the inside of the polymerization vessel is evacuated to a pressure of from 0.1 to 760 mmHg, and a monomer is then charged (whereupon the pressure inside the polymerization vessel usually becomes from 0.5 to 30 $kgf/cm^2$.G). Thereafter, polymerization is carried out at a temperature of from 30 to 150°C. During the polymerization, one or more of water, a dispersing agent and a polymerization initiator may be added, if necessary. Reaction temperature during the polymerization is different depending on the kind of monomer to be polymerized. For example, in the case of polymerizing vinyl chloride, polymerization is carried out at 30 to 80°C; in the case of polymerizing styrene, polymerization is carried out at 50 to 150°C. The polymerization may be judged to be completed when the pressure inside the polymerization vessel falls to from 0 to 7 $kgf/cm^2$.G or when cooling water which passes through a jacket provided around the polymerization vessel indicates almost the same temperature at the inlet where it is charged and at the outlet where it is discharged (i.e., when liberation of heat due to polymerization reaction has subsided). The water, dispersing agent and polymerization initiator to be charged for polymerization are used in amounts of 20 to 500 parts by weight, 0.01 to 30 parts by weight, and 0. 01 to 5 parts by weight, respectively, per 100 parts by weight of the monomer.

In the case of solution polymerization, an organic solvent such as toluene, xylene and pyridine is used as the polymerization medium in place of water. The dispersing agent is optionally used. The other conditions are generally the same as those described for suspension and emulsion polymerizations.

In the case of bulk polymerization, after the inside of a polymerization vessel is evacuated to a pressure of from about 0.01 mmHg to about 760 mmHg, a monomer and a polymerization initiator are charged into the polymerization vessel, and then polymerization is carried out at a temperature of from -10°C to 250°C. Specific methods of the bulk polymerization includes, for example, liquid bulk polymerization and gas phase polymerization.

The present invention makes it possible to prevent polymer scale from depositing, independent of materials constituting the inner wall, etc. of a polymerization vessel. For example, this invention can prevent deposition of polymer scale even in the case polymerization is carried out in a polymerization vessel made of a steel including stainless steel or lined with glass.

Any additive materials that have been conventionally added in a polymerization system can be used without any limitation. More specifically, the method of this invention can effectively prevent polymers from depositing, even in polymerization systems containing the following additives: for example, polymerization catalysts such as t-butyl peroxyneodecanoate, bis(2-ethylhexyl) peroxydicarbonate, 3,5,5-trimethylhexanoyl peroxide, α-cumyl peroxyneodecanoate, cumene hydroperoxide, cyclohexanone peroxide, t-butyl peroxypivalate, bis(2-ethoxylhexyl) peroxydicarbonate, benzoyl peroxide, lauroyl peroxide, 2,4-dichlorobenzoyl peroxide, diisopropyl peroxydicarbonate, α,α'-azobisisobutyronitrile, α,α'-azobis-2,4-dimethylvaleronitrile, potassium peroxodisulfate, ammonium peroxodisulfate, and p-menthane hydroperoxide; suspension agents comprised of natural or synthetic polymeric compounds such as partially saponified polyvinyl alcohols, polyacrylic acids, vinyl acetate/maleic anhydride copolymers, cellulose derivatives such as hydroxypropylmethyl cellulose, and gelatin; solid dispersing agents such as calcium phosphate and hydroxyapatite; nonionic emulsifying agents such as sorbitan monolaurate, sorbitan trioleate and polyoxyethylene alkyl ether; anionic emulsifying agents such as sodium lauryl sulfate, sodium alkylbenzenesulfonates such as sodium dodecylbenzenesulfonate and sodium dioctylsulfosuccinate; fillers such as calcium carbonate and titanium oxide; stabilizers such as tribasic lead sulfate, calcium stearate, dibutyltin dilaurate and dioctyltin mercaptide; lubricants such as rice wax, stearic acid and cetyl alcohol; plasticizers such as DOP and DBP; chain transfer agents such as mercaptans such as t-dodecyl mercaptan, and trichloroethylene; and pH adjusters.

Addition to polymerization mass

The polymer scale preventive agent of the present invention may be added to a polymerization mass in addition to the formation of the coating, so that the scale preventing effect is further improved. The amount of the polymer scale preventive agent to be added to the polymerization mass preferably in the range of about 10 to about 1,000 ppm based on the whole weight of the monomers charged. The polymer scale preventive agent is normally added in the form of liquid like the coating liquid described above, although the form thereof is not limited. The addition should be conducted so that it may not adversely affect the quality of polymeric products to be obtained with respect to fish eyes, bulk density, particle size distribution, etc.

Optional gredients

Incidentally, the polymer scale preventive agent described above may optionally contains one or more inorganic colloids other than the colloidal silica mentioned above, including, for example, gold colloid, silver colloid, silver iodide sol, selenium colloid, sulfur colloid, and colloids of oxides of metals such as, e.g., aluminum, thorium, titanium, antimony, tin and iron.

EXAMPLES

The working examples of the present invention and comparative examples will now be described below. In each table below, experiments marked with * are comparative examples and the other experiments are working examples of the present invention.

Production Example 1

Production of Condensation Product No.1

Nine hundred and eighty g of methanol, 10 g of p-aminophenol, 8 g of 4-aminodiphenylamine were charged in an autoclave, and these were mixed by stirring at room temperature to dissolve the p-aminophenol and the 4-aminodiphenylamine in the methanol to prepare a methanol solution.

The methanol solution was added with 2 g of nitrobenzene and heated up to 50 °C. Then, reaction was carried out at 50 °C for 10 hours and cooled, so that a methanol solution of the condensation product No.1 was obtained.

Production of Condensation Products Nos. 2 to 17

In each production, the procedure of Production of Condensation Product No.1 was repeated, except that an aromatic amine compound and an aromatic nitro compound given in Table 1 and a solvent given in Table 2 were used, and reaction was carried out under the conditions with respect to concentration, temperature and time specified in Table 2. Thus, solutions of condensation products of Nos. 2 to 17 were obtained.

Production of Condensation Product No.18

The condensation product No.1 described in Japanese Patent Publication (KOKOKU) No.60-30681 (1985)(a condensation product obtained by condensing aniline and nitrobenzene in the presence of mineral acid) was produced according to the Publication. The condensation product thus obtained is hereinafter referred to Condensation Product No.18.

Table 1

| Conden-sation product No. | (A) Aromatic amine compound | | (B) Aromatic nitro compound |
|---|---|---|---|
| | (A-1) | (A-2) | |
| 1 | p-Aminophenol | 4-Aminodi-phenylamine | Nitrobenzene |
| 2 * | p-Aminophenol | 4-Aminodiphenylamine | - |
| 3 * | - | - | Nitrobenzene |
| 4 | p-Aminophenol | 2-Aminodiphenylamine | o-Hydroxynitrobenzene |
| 5 | m-Aminophenol | m-Phenylene-diamine | o-Chloronitrobenzene |
| 6 | o-Aminophenol | 2-Aminodiphenylamine | p-Nitoroanisole |
| 7 | p-Aminophenol | 4-Aminodiphenylamine | p-Nitrobenzoic acid |
| 8 | 2-Nitro-4-aminophenol | m-Phenylenediamine | Nitrobenzene |
| 9 | p-Aminosalicylic acid | 4-Aminodiphenylamine | p-Hydroxynitrobenzene |
| 10 | p-Aminophenol | 1,8-Diaminonaphthalene | Nitrobenzene |
| 11 | m-Aminophenol | α-Naphthylamine | m-Nitroanisole |
| 12 | 4-Amino-2-aminophenol | 1,8-Diaminonaphthalene | p-Nitroanisole |
| 13 | p-Aminosalicylic acid | Aniline | Nitrobenzene |
| 14 | o-Aminophenol | - | o-Hydroxynitrobenzene |
| 15 | 4-Aminodiphenyl amine | - | p-Nitrobenzoic acid |
| 16 | p-Aminophenol | - | m-Chloronitrobenzene |
| 17 | m-Phenylenediamine | - | Nitrobenzene |

Table 2

| Condensation product No. | (A-1) + (A-2) + -(B) Concentration (wt.%) | (A-1):(A-2):(B) (Weight ratio) | Solvent (Weight ratio) | Reaction temperature (°C) | Reaction time (Hr) |
|---|---|---|---|---|---|
| 1 | 2.0 | 100: 80: 20 | Methanol | 50 | 10 |
| 2 * | 2.0 | 100: 80:- | Methanol | 50 | 10 |
| 3 * | 2.0 | - | Methanol | 50 | 10 |
| 4 | 2.0 | 100: 50: 50 | Methanol | 30 | 50 |
| 5 | 5.0 | 100: 50: 50 | Methanol:Water (70:30) | 100 | 5 |
| 6 | 2.0 | 100:100: 30 | Methanol | 100 | 5 |
| 7 | 2.0 | 100:100: 30 | Methanol | 150 | 1 |
| 8 | 3.0 | 100: 30: 20 | Methanol:Water (80:20) | 150 | 1 |
| 9 | 3.0 | 100: 50: 20 | Methanol | 150 | 0.5 |
| 10 | 2.0 | 100: 50:10 | Methanol | 50 | 5 |
| 11 | 2.0 | 100: 10: 10 | Methanol | 80 | 5 |
| 12 | 4.0 | 100: 10: 10 | Methanol | 80 | 3 |
| 13 | 2.0 | 100: 10: 30 | Methanol | 80 | 10 |
| 14 | 2.0 | 100:- : 30 | Methanol | 100 | 2 |
| 15 | 1.0 | 100:- : 50 | Methanol:Water (70:30) | 50 | 10 |
| 16 | 1.0 | 100:- : 30 | Methanol | 100 | 5 |
| 17 | 1.0 | 100:- : 10 | Methanol | 80 | 3 |

Example 1 (Experiment Nos. 101 to 118.)

In each experiment, polymerization was conducted using a stainless steel polymerization vessel with an inner capacity of 1,000 litters and having a stirrer, as described below.

A coating liquid used in each experiment was prepared as follows: the solution of a condensation product obtained in Production Example 1 was added with a solvent so that the solvent composition and the concentration of the condensation product in the resulting liquid might become the values shown in the Table 3. The pH of the liquid mixture was adjusted to the pH value shown in the Table 3 by addition of a pH adjustor. The number of condensation product and the pH adjustor used in each experiment are shown in the Table 3. The coating liquid thus obtained was applied to the inner wall, the stirring shaft, the stirring blades and other areas with which a monomer comes into contact of the polymerization vessel. The applied coating liquid was dried by heating at 40°C for 15 minutes to form a coating, which was then washed with water.

It is to be noted that the experiment of No. 118 is a comparative example in which a coating liquid containing the condensation product No. 18 was applied to the inner wall, etc.

Thereafter, into the polymerization vessel in which the coating was formed as above, 400kg of water, 200kg of vinyl chloride, 250g of a partially saponified polyvinyl alchol, 25 g of hydroxypropyl methyl cellulose and 70g of 3, 5, 5-trimethylhexanoyl peroxide were charged, followed by polymerization with stirring at 66°C for 6 hours. After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 20 times. After the 20th batch, the amount of polymer scale on an area located in the liquid during polymerization and on an area in the vicinity of the interface between the gas and liquid

phases, was measured according to the method below. The results are given in Table 4.

- Measurement of the amount of deposited polymer scale

The scale deposited in an area of 10 cm square on the inner wall is scraped off with a stainless steel spatula as completely as possible to be confirmed with naked eyes, and then the scraped scale is weighted on a balance. Thereafter, the amount of the deposited scale per area of 1 $m^2$ is obtained by multiplying the measured value by 100.

The number of fish eyes which may appear when a polymer is formed into sheet was measured with respect to the polymers produced in the experiments according to the method below. The results are given in Table 4.

- Measurement of fish eyes

A hundred parts by weight of a polymer, 50 parts by weight of dioctyl phthalate (DOP), 1 part by weight of dibutyltin dilaurate, 1 part by weight of cetyl alcohol, 0.25 part by weight of titanium oxide and 0.05 part by weight of carbon black are formulated to prepare a mixture. The mixture is kneaded at 150 °C for 7 minutes with 6 inch rolls, and then formed into a sheet 0.2 mm thick. The sheet is examined for the number of fish eyes per 100 $cm^2$ by light transmission.

Further, to evaluate initial coloration at the time a polymer is formed into sheet, luminosity index L was measured according to the method below. The results are given in Table 4.

- Measurement of luminosity index L

A hundred parts by weight of a polymer, 1 part by weight of a tin laurate stabilizing agent (trade name: TS-101, product of Akisima Chemical Co.) and 0.5 part by weight of cadmium stabilizing agent (trade name: C-100J, product of Katsuta Kako Co.), and 50 parts by weight of DOP are kneaded at 160 °C for 5 minutes with a twin roll mill, and then formed into a sheet 1 mm thick. Subsequently, this sheet is placed in a mold measuring 4 cm x 4 cm x 1.5 cm (depth), and molded under heating at 160 °C and a pressure of 65 to 70 kgf/$cm^2$ to prepare a test specimen. This test specimen is measured for luminosity index L in the Hunter's color difference equation described in JIS Z 8730 (1980). The lower initial coloration, the more the value of L.

The value of L was determined as follows. The stimulus value Y of XYZ color system is determined according to the photoelectric tristimulus colorimetry using the standard light C, photoelectric colorimeter (Color measuring color difference meter Model Z-1001DP, product of Nippon Denshoku Kogyo K.K.) in accordance with JIS Z 8722. As the geometric condition for illumination and being illuminated, the condition d defined in section 4.3.1 of JIS Z 8722 is adopted. Next, L is calculated based on the equation: $L = 10Y^{\frac{1}{2}}$ describedin JIS Z 8730 (1980).

Table 3

| Exp. No. | Coating liquid | | | | |
|---|---|---|---|---|---|
| | Condensation product No. | Concentration (wt.%) | pH adjuster | pH | Solvent (Weight ratio) |
| 101 | 1 | 0.2 | NaOH | 10.0 | Water:Methanol (80:20) |
| 102* | 2* | 0.2 | NaOH | 10.0 | Water:Methanol (80:20) |
| 103* | 3* | 0.2 | NaOH | 10.0 | Water:Methanol (80:20) |
| 104 | 4 | 0.2 | NaOH | 9.5 | Water:Methanol (80:20) |
| 105 | 5 | 0.2 | $Na_2CO_3$ | 9.5 | Water:Methanol (80:20) |
| 106 | 6 | 0.2 | KOH | 9.5 | Water:Methanol (80:20) |
| 107 | 7 | 0.1 | $NH_4OH$ | 8.5 | Water:Methanol (70:30) |
| 108 | 8 | 0.2 | Monoethanolamine | 12.0 | Water:Methanol (70:30) |
| 109 | 9 | 0.05 | Triethanolamine | 12.0 | Water:Methanol (60:40) |
| 110 | 10 | 0.2 | $Na_2SiO_3$ | 11.0 | Water:Methanol (80:20) |
| 111 | 11 | 0.2 | Monoethanolamine | 9.5 | Water:Methanol (80:20) |
| 112 | 12 | 0.2 | Triethanolamine | 10.0 | Water:Methanol (80:20) |
| 113 | 13 | 0.2 | Ethylenediamine | 10.5 | Water:Methanol (80:20) |
| 114 | 14 | 0.2 | NaOH | 10.5 | Water:Methanol (80:20) |
| 115 | 15 | 0.2 | - | 6.5 | Water:Methanol (50:50) |
| 116 | 16 | 0.2 | HCl | 3.0 | Water:Methanol (50:50) |
| 117 | 17 | 0.2 | $H_2SO_4$ | 3.0 | Water:Methanol (50:50) |
| 118* | 18* | 0.2 | NaOH | 10.0 | Water:Methanol (80:20) |

Table 4

| Exp. No. | Results after 20th polymerization batch | | | |
|---|---|---|---|---|
| | Scale amount ($g/m^2$) | | Number of fish eyes | Luminosity index (L) |
| | Liquid phase | Around interface of gas-liquid phases | | |
| 101 | 0 | 6 | 6 | 72.6 |
| 102* | 110 | 1800 | 46 | 72.4 |
| 103* | 650 | 8000 | 58 | 72.6 |
| 104 | 0 | 7 | 7 | 72.6 |
| 105 | 0 | 6 | 7 | 72.6 |
| 106 | 0 | 8 | 10 | 72.5 |
| 107 | 0 | 7 | 7 | 72.5 |
| 108 | 0 | 7 | 7 | 72.5 |
| 109 | 0 | 15 | 10 | 72.7 |
| 110 | 0 | 7 | 7 | 72.7 |
| 111 | 0 | 6 | 7 | 72.7 |
| 112 | 0 | 6 | 7 | 72.7 |
| 113 | 0 | 7 | 7 | 72.7 |
| 114 | 0 | 17 | 12 | 72.6 |
| 115 | 0 | 62 | 27 | 71.5 |
| 116 | 0 | 51 | 26 | 71.6 |
| 117 | 0 | 45 | 23 | 71.6 |
| 118 | 0 | 550 | 32 | 69.8 |

Example 2 (Experiment Nos. 201 to 217.)

In each experiment, polymerization was conducted using a stainless steel polymerization vessel with an inner capacity of 20 litters and having a stirrer, as described below.

A coating liquid used in each experiment was prepared as follows: the solution of a condensation product obtained in Production Example 1 was added with a solvent so that the solvent composition and the concentration of the condensation product in the resulting liquid might become the values shown in the Table 5. The pH of the liquid mixture was adjusted to the pH value shown in the Table 5 by addition of a pH adjustor. The number of condensation product and the pH adjustor used in each experiment are shown in

the Table 5. The coating liquid thus obtained was applied to the inner wall, the stirring shaft, the stirring blades and other areas with which a monomer comes into contact of the polymerization vessel. The applied coating liquid was dried by heating at 40 ° C for 15 minutes to form a coating, which was then washed with water.

Next, into the polymerization vessel in which the coating was formed as above, 9 kg of water, 225 g of sodium dodecylbenzenesulfonate, 12 g of t-dodecyl mercaptan, 13 g of patassium peroxodisulfate were charged, and the gas in the polymerization vessel was replaced with nitrogen gas, then 1.3 kg of styrene, and 3.8 kg of butadiene were charged, followed by polymerization at 50 ° C for 20 hours. After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 15 times. After the 15th batch, the amount of polymer scale on an area located in the liquid during polymerization and on an area in the vicinity of the interface between the gas and liquid phases, was measured by the same method in Example 1. The results are given in Table 6.

Further, to evaluate initial coloration at the time a polymer is formed into sheet, luminosity index L was measured according to the method below. The results are given in Table 6.

- Measurement of luminosity index L

One kg of the polymer obtained in each experiment was added with 1 kg of a solution of magnesium sulfate to cause aggregation and precipitation. The formed sediment was filtered off, washed with hot water at 80 to 90 ° C twice or three times, and dried in a vaccum dryer at 40 ° C for 25 hours. As a result, a resin was obtained. Subsequently, this resin was put into a mold measuring 9 cm x 9 cm x 0.1 cm (depth), heated at 195 ° C and a pressure of 50 to 60 kgf/cm$^2$, finally press-molded under 80 kgf/cm$^2$ to prepare a test specimen. This test specimen was measured for luminosity index L in the same manner as Example 1.

Table 5

| Exp. No. | Coating liquid | | | | |
|---|---|---|---|---|---|
| | Condensation product No. | Concentration (wt.%) | pH adjuster | pH | Solvent (Weight ratio) |
| 201 | 1 | 0.2 | Ethylenediamine | 10.0 | Water:Methanol (80:20) |
| 202* | 2* | 0.2 | Ethylenediamine | 10.0 | Water:Methanol (80:20) |
| 203* | 3* | 0.2 | Ethylenediamine | 10.0 | Water:Methanol (80:20) |
| 204 | 4 | 0.2 | NaOH | 10.0 | Water:Methanol (80:20) |
| 205 | 5 | 0.1 | KOH | 9.0 | Water:Methanol (70:30) |
| 206 | 6 | 0.3 | LiOH | 8.5 | Water:Methanol (70:30) |
| 207 | 7 | 0.3 | $Na_2CO_3$ | 11.0 | Water:Methanol (70:30) |
| 208 | 8 | 0.05 | Monoethanolamine | 11.0 | Water:Methanol (70:30) |
| 209 | 9 | 0.2 | Triethanolamine | 12.0 | Water:Methanol (80:20) |
| 210 | 10 | 0.2 | Ethylenediamine | 12.5 | Water:Methanol (80:20) |
| 211 | 11 | 0.2 | Ethylenediamine | 10.5 | Water:Methanol (80:20) |
| 212 | 12 | 0.2 | Ethylenediamine | 10.5 | Water:Methanol (90:10) |
| 213 | 13 | 0.2 | $H_2SO_4$ | 2.5 | Water:Methanol (90:10) |
| 214 | 14 | 0.2 | Triethanolamine | 10.0 | Water:Methanol (90:10) |
| 215 | 15 | 0.2 | Monoethanolamine | 9.0 | Water:Methanol (90:10) |
| 216 | 16 | 0.2 | Ethylenediamine | 9.0 | Water:Methanol (50:50) |
| 217 | 17 | 0.2 | HCl | 3.0 | Water:Methanol (50:50) |

Table 6

| Exp. No. | Results after 15th polymerization batch | | |
|---|---|---|---|
| | Scale amount ($g/m^2$) | | Luminosity index (L) |
| | Liquid phase | Around interface of gas-liquid phases | |
| 201 | 0 | 7 | 85.6 |
| 202* | 65 | 1300 | 85.2 |
| 203* | 250 | 4000 | 85.6 |
| 204 | 0 | 8 | 85.5 |
| 205 | 0 | 10 | 85.6 |
| 206 | 0 | 13 | 85.5 |
| 207 | 0 | 10 | 85.5 |
| 208 | 0 | 19 | 85.7 |
| 209 | 0 | 11 | 85.7 |
| 210 | 0 | 9 | 85.7 |
| 211 | 0 | 12 | 85.7 |
| 212 | 0 | 10 | 85.7 |
| 213 | 0 | 27 | 84.8 |
| 214 | 0 | 28 | 85.7 |
| 215 | 0 | 25 | 85.7 |
| 216 | 0 | 23 | 85.7 |
| 217 | 0 | 36 | 84.8 |

Production Example 2

Production of Condensation Product No.19

Nine thousand and six hundred (9600) g of methanol, 184 g of 4-aminodiphenylamine and 378 g of pyrogallol were charged in an autoclave, and these were mixed by stirring at room temperature to dissolve the 4-aminodiphenylamine and the pyrogallol in the methanol to prepare a methanol solution.

The methanol solution was added with triethanolamine and pH of the solution was adjusted to 9.0. The solution thus obtained was added with 12.3 g of nitrobenzene and heated up to 50 ° C. Then reaction was carried at 50 ° C for 5 hours, and after cooling a methanol solution of the condensation product No.19 was obtained.

Production of Condensation Products Nos.20 to 30

In each production, using an aromatic amine compound, an aromatic nitro compound and an aromatic hydroxy compound shown in Table 7 and an alkaline compound and a solvent shown in Table 8, a condensation reaction was carried out in the same manner as in the production of condensation product No.1. Thus the solutions of Condensation Products No.20 to 30 were obtained.

Table 7

| Condensation product No. | (A) Aromatic amine compound (g) | (B) Aromatic nitro compound (g) | (C) Aromatic hydroxy compound (g) |
|---|---|---|---|
| 19 | 4-Aminodiphenylamine (184) | Nitrobenzene (12.3) | Pyrogallol (378) |
| 20 | 4-Aminodiphenylamine (184) | Nitrobenzene (12.3) | - |
| 21 | 1,8-Diaminonaphthalene (158) | o-Hydroxynitrobenzen (13.9) | Catechol (551) |
| 22 | α-Naphthylamine (143) | p-Chloronitrobenzene (78.8) | Pyrogallol (378) |
| 23 | 1,5-Diaminonaphthalene (158) | p-Chloronitrobenzene (15.8) | Hydroxyhydroquinone (378) |
| 24 | 2-Aminodiphenylamine (184) | Nitrobenzene (12.3) | 2,7-Dihydroxynaphthalene (801) |
| 25 | o-Phenylenediamine (108) | m-Nitrobenzoic acid (16.7) | 1,3-Dihydroxynaphthalene (801) |
| 26 | Aniline (93) | Nitrobenzene (12.3) | β-Naphthol (72) |
| 27 | p-Aminophenol (109) | p-Chloronitrobenzene (15.8) | Hydroquinone (55) |
| 28 | m-Phenylenediamine (108) | Nitrobenzene (12.3) | Pyrogallol (631) |
| 29 | 2,3-Diaminonaphthalene (158) | Nitrobenzene (12.3) | β-Naphthol(1009) |
| 30 | 1,8-Diaminonophthalene (158) | Nitrobenzene (12.3) | 1,3-Dihydroxynaphthalene (801) |

Table 8

| Condensation product No. | Solvent (Weight ratio) | Solvent amount (g) | Alkaline compound | pH |
|---|---|---|---|---|
| 19 | Methanol | 9600 | Triethanolamine | 9.0 |
| 20 | Methanol | 9600 | Triethanolamine | 9.0 |
| 21 | Methanol | 9600 | Triethanolamine | 9.0 |
| 22 | Water:Methanol (10:90) | 9600 | Triethanolamine | 9.0 |
| 23 | Methanol | 9600 | Monoethanolamine | 11.0 |
| 24 | Water: Methanol (20:80) | 15000 | Triethanolamine | 8.0 |
| 25 | Methanol | 15000 | Triethanolamine | 9.0 |
| 26 | Methanol | 9600 | Triethanolamine | 9.0 |
| 27 | Methanol | 9600 | NaOH | 9.0 |
| 28 | Methanol | 13000 | Triethanolamine | 9.0 |
| 29 | Methanol | 20000 | Triethanolamine | 9.0 |
| 30 | Methanol | 15000 | Triethanolamine | 9.0 |

Example 3 (Experiment Nos. 301 to 312.)

In each experiment, polymerization was conducted using a stainless steel polymerization vessel with an inner capacity of 1,000 litters and having a stirrer, as described below.

A coating liquid used in each experiment was prepared as follows: the solution of a condensation product obtained in Production Example 2 was added with a solvent so that the solvent composition and the concentration of the condensation product in the resulting liquid might become the values shown in the Table 9. The pH of the liquid mixture was adjusted to the pH value shown in the Table 9 by addition of a pH adjustor. The number of condensation product and the pH adjustor used in each experiment are shown in the Table 9. The coating liquid thus obtained was applied to the inner wall, the stirring shaft, the stirring blades and other areas with which a monomer comes into contact of the polymerization vessel. The applied coating liquid was dried by heating at 40 °C for 15 minutes to form a coating, which was then washed with water.

Thereafter, into the polymerization vessel in which the coating was formed as above, polymerization was conducted in the same manner as Example 1. After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 50 times. After the 50th batch, the amount of polymer scale on an area located in the liquid during polymerization and on an area in the vicinity of the interface between the gas and liquid phases, was measured in the same manner as in Example 1. The results are given in Table 10.

The number of fish eyes which may appear when a polymer is formed into sheet, and luminosity index L were measured with respect to the polymers produced in the experiments in the same manner as in Example 1. The results are given in Table 10.

Table 9

| Exp. No. | Coating liquid | | | | |
|---|---|---|---|---|---|
| | Condensation Product No. | Concentration (wt.%) | Solvent (Weight ratio) | pH adjuster | pH |
| 301 | 19 | 0.3 | Water:Methanol (70:30) | NaOH | 11.0 |
| 302 | 20 | 0.3 | Water:Methanol (70:30) | NaOH | 11.0 |
| 303 | 21 | 0.3 | Water:Methanol (50:50) | NaOH | 11.0 |
| 304 | 22 | 0.3 | Water:Methanol (50:50) | NaOH | 11.0 |
| 305 | 23 | 0.2 | Water:Methanol (50:50) | NaOH | 11.0 |
| 306 | 24 | 0.3 | Water:Methanol (70:30) | NaOH | 11.5 |
| 307 | 25 | 0.3 | Water:Methanol (50:50) | NaOH | 11.5 |
| 308 | 26 | 0.3 | Water:Methanol (90:10) | NaOH | 11.5 |
| 309 | 27 | 0.3 | Water:Methanol (50:50) | NaOH | 11.5 |
| 310 | 28 | 0.3 | Water:Methanol (50:50) | NaOH | 11.5 |
| 311 | 29 | 0.3 | Water:Methanol (50:50) | NaOH | 11.5 |
| 312 | 30 | 0.3 | Water:Methanol (50:50) | NaOH | 11.5 |

Table 10

| Exp. No. | Results after 50th polymerization batch | | | |
|---|---|---|---|---|
| | Scale amount ($g/m^2$) | | Number of fish eyes | Luminosity index (L) |
| | Liquid phase | Around interface of gas-liquid phases | | |
| 301 | 0 | 5 | 2 | 72.6 |
| 302 | 0 | 5400 | 53 | 70.8 |
| 303 | 0 | 3 | 4 | 72.6 |
| 304 | 0 | 4 | 4 | 72.5 |
| 305 | 0 | 4 | 6 | 72.5 |
| 306 | 0 | 8 | 6 | 72.5 |
| 307 | 0 | 12 | 7 | 72.5 |
| 308 | 0 | 10 | 5 | 72.5 |
| 309 | 0 | 24 | 9 | 72.5 |
| 310 | 0 | 17 | 8 | 72.6 |
| 311 | 0 | 18 | 8 | 72.6 |
| 312 | 0 | 25 | 11 | 72.5 |

Production Example 3

Production of Condensation Product No.31

Nine hundred and eighty (980) g of methanol, 10 g of p-aminophenol and 5 g of 4-aminodiphenylamine as the aromatic amine compound were charged in an autoclave, and these were mixed by stirring at room temperature to prepare a methanol solution.

The methanol solution thus obtained was added with 2 g of nitrobenzene as the aromatic nitro compound and the mixture thus obtained was heated up to 80° C. Then, reaction was carried out at 80° C for 5 hours. Thereafter, the reaction mixture was added with 3 g of pyrogallol as the aromatic hydroxy compound. At the time when the addition was started, the condensation conversion of the aromatic amine compound and the aromatic nitro compoun was measured by the method below and found to be 71% by weight.

After the addition of the pyrogallol, stirring of the reaction mixture was continued for another 45 hours. Thereafter, the reaction mixture was cooled to give a methanol solution of Condensation Product No. 31.

- Measurement of condensation conversion

The unreacted aromatic amine compound (i.e., p-aminophenol and 4-aminodiphenylamine in the Production Example 31) and the unreacted aromatic nitro compound (i.e., nitrobenzene in the Production Example 31) in a condensation reaction mixture is determined by liquid chromatography.

The condensation conversion is calculated by the equation:

Condensation conversion(% by weight) = [(a-b)/a)] x 100

wherein a stands for the total amount of the aromatic amine compounds and the aromatic nitro compounds charged and b stands for the amount of the unreacted aromatic amine compounds and the aromatic nitro compounds determined as above.

Production of Condensation Product Nos.32 to 44

In each production, using an aromatic amine compound (A), an aromatic nitro compound (B) and an aromatic hydroxy compound (C) shown in Table 11 and a solvent shown in Table 12, a condensation reaction was carried out in the same manner as in the production of Condensation Product No.31 under the conditions of the concentration, the ratio of the reactants and the reaction temperature shown in Table 12, thus Condensation Products No. 32 to 44 were obtained. More, the elapsed time from the start of the condensation of the aromatic amine compound (A) and the aromatic nitro compound (B) until the addition of the aromatic hydroxy compound (C), condensation conversion of the aromatic amine compound (A) and the aromatic nitro compound (B) at the time when the addition of the aromatic hydroxy compound (C) was started, the stirring time after the addition of the aromatic hydroxy compound, and the total time needed to complete the condensation reaction are given in Table 12.

Production of Condensation Product No.45

Nine hundred and eighty (980) g of methanol, 10 of p-aminophenol and 5 g of 4-aminodiphenylamin as the aromatic amine compound and 3 g of pyrogallol as the aromatic nitro compound were charged in an autoclave, and these were mixed to dissolve the p-aminophenol and the 4-aminodiphenylamine and the pyrogallol in the methanol to prepare a methanol solution.

The methanol solution thus obtained was added with 2 g of nitrobenzene as the aromatic nitro compound and heated up to 80 ° C. Then, reaction was carried out at 80 ° C for 50 hours and cooled, so that a methanol solution of Condensation Product No.45 was obtained.

Table 11

| Condensation product No. | (A) Aromatic amine compound | | (B) Aromatic nitro compound | (C) Aromatic hydroxy compound |
|---|---|---|---|---|
| | (A-1) | (A-2) | | |
| 31 | p-Aminophenol | 4-Aminodiphenylamine | Nitrobenzene | Pyrogallol |
| 32 | p-Aminosalicylic acid | 1,8-Diaminonaphthalene | p-Chloronitrobenzene | Catechol |
| 33 | o-Aminophenol | Aniline | m-Nitroanisole | α-Naphthol |
| 34 | p-Aminobenzoic acid | p-Phenylendiamine | p-Hydroxynitrobenzene | Hydroquinone |
| 35 | o-Aminophenol | 4,4'-Diaminodiphenylamine | Nitrobenzene | 2,7-Dihydroxynaphthalene |
| 36 | 4-Amino-2-aminophenol | p-Aminosalicylic acid | p-Chloronitrobenzene | o-Hydroxybenzoic acid |
| 37 | p-Aminophenol | α-Naphthylamine | o-Nitrobenzoic acid | Hydroxyhydroquinone |
| 38 | p-Aminobenzoic acid | m-Phenylenediamine | Nitrobenzene | Catechol |
| 39 | p-Aminophenol | p-Aminosalicylic acid | m-Nitroanisole | p-Hydroxybenzoic acid |
| 40 | m-Aminobenzenesulfonic acid | 4-Aminodiphenylamine | m-Hydroxynitrobenzene | 2,4-Dihydroxybenzoic acid |
| 41 | m-Phenylendiamine | - | Nitrobenzene | Hydroxyhydroquinone |
| 42 | p-Aminophenol | - | Nitrobenzene | Pyrogallol |
| 43 | p-Aminosalicylic acid | - | p-Hydroxynitrobenzene | Resorcinol |
| 44 | 1,8-Diaminonaphthalene | - | o-Nitroanisole | Hydroquinone |
| 45 | p-Aminophenol | 4-Aminodiphenylamine | Nitrobenzene | Pyrogallol |

Table 12

| Condensation product No. | Total conc. of (A) + (B) + (C) (wt.%) | (A-1): (A-2): (B): (C) (Weight Ratio) | Solvent (weight ratio) | Reaction temperature (°C) | Elapsed time till addition of (C) (Hr) | Condensation conversion (%) | stirring time (Hr) | Entire condensation time (Hr) |
|---|---|---|---|---|---|---|---|---|
| 31 | 2.0 | 100: 50: 20: 30 | Methanol | 80 | 5 | 71 | 45 | 50 |
| 32 | 2.0 | 100:200: 50: 50 | Methanol | 50 | 5 | 95 | 45 | 50 |
| 33 | 2.0 | 100: 50: 50: 50 | Methanol | 150 | 10 | 72 | 40 | 50 |
| 34 | 1.5 | 100: 50: 20:100 | Methanol | 100 | 8 | 75 | 42 | 50 |
| 35 | 1.5 | 100:100:100:100 | Methanol | 50 | 20 | 76 | 30 | 50 |
| 36 | 2.0 | 100:100: 50: 50 | Methanol | 50 | 20 | 81 | 30 | 50 |
| 37 | 2.0 | 100:100: 50: 50 | Methanol | 50 | 20 | 82 | 30 | 50 |
| 38 | 1.0 | 100:100: 50: 50 | Methanol | 80 | 10 | 85 | 40 | 50 |
| 39 | 1.0 | 100:100: 20: 50 | Methanol | 30 | 20 | 92 | 30 | 50 |
| 40 | 1.0 | 100: 50: 20:100 | Water: Methanol (50:50) | 50 | 10 | 83 | 40 | 50 |
| 41 | 1.0 | 100:100: 50:100 | Methanol | 50 | 10 | 87 | 40 | 50 |
| 42 | 1.5 | 100: 50: 50:100 | Methanol | 80 | 5 | 78 | 45 | 50 |
| 43 | 1.5 | 100: 50: 20: 50 | Methanol | 80 | 5 | 81 | 45 | 50 |
| 44 | 1.0 | 100:100: 50: 50 | Methanol | 100 | 5 | 76 | 45 | 50 |
| 45 | 1.0 | 100:100: 50:200 | Methanol | 80 | 0 | 0 | 0 | 50 |

Example 4 (Experiment Nos. 401 to 415.)

In each experiment, polymerization was conducted using a stainless steel polymerization vessel with an inner capacity of 1,000 litters and having a stirrer, as described below.

A coating liquid used in each experiment was prepared as follows: the solution of a condensation product obtained in Production Example 3 was added with a solvent so that the solvent composition and the concentration of the condensation product in the resulting liquid might become the values shown in the Table 13. The pH of the liquid mixture was adjusted to the pH value shown in the Table 13 by addition of a pH adjustor. The number of condensation product and the pH adjustor used in each experiment are shown in the Table 13. The coating liquid thus obtained was applied to the inner wall, the stirring shaft, the stirring blades and other areas with which a monomer comes into contact of the polymerization vessel. The applied coating liquid was dried by heating at 40 °C for 15 minutes to form a coating, which was then washed with water.

Thereafter, into the polymerization vessel in which the coating was formed as above, polymerization was conducted in the same manner as in Example 1. After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 100 times. After the 100th batch, the amount of polymer scale on an area located in the liquid during polymerization and on an area in the vicinity of the interface between the gas and liquid phases, was measured in the same manner as in Example 1. The results are given in Table 14.

The number of fish eyes which may appear when a polymer is formed into sheet, and luminosity index L were measured with respect to the polymers produced in the experiments in the same manner as in Example 1. The results are given in Table 14.

Table 13

| Exp. No. | Coating liquid | | | | |
|---|---|---|---|---|---|
| | Condensation product No. | Concentration (Wt.%) | pH adjuster | pH | Solvent (weight ratio) |
| 401 | 31 | 0.2 | NaOH | 9.5 | Water:Methanol(80:20) |
| 402 | 32 | 0.2 | NaOH | 10.0 | Water:Methanol(80:20) |
| 403 | 33 | 0.2 | KOH | 11.0 | Water:Methanol(80:20) |
| 404 | 34 | 0.3 | Triethanolamine | 10.5 | Water:Methanol(50:50) |
| 405 | 35 | 0.3 | NaOH | 10.0 | Water:Methanol(50:50) |
| 406 | 36 | 0.2 | Ethylenediamine | 9.0 | Water:Methanol(10:90) |
| 407 | 37 | 0.5 | Ethylenediamine | 8.5 | Water:Methanol (70:30) |
| 408 | 38 | 0.3 | Sodium silicate | 9.0 | Water:Methanol(30:70) |
| 409 | 39 | 0.2 | NaOH | 9.0 | Water:Methanol(50:50) |
| 410 | 40 | 0.2 | Diethylenediamine | 10.5 | Water:Methanol(50:50) |
| 411 | 41 | 0.2 | Triethylenetetramine | 11.0 | Water:Methanol(50:50) |
| 412 | 42 | 0.3 | Diethanolamine | 12.0 | Water:Methanol(50:50) |
| 413 | 43 | 0.3 | Diethanolamine | 10.0 | Water:Methanol(70:30) |
| 414 | 44 | 0.2 | Diethanolamine | 10.0 | Water:Methanol(70:30) |
| 415 | 45 | 0.2 | NaOH | 9.5 | Water:Methanol(80:20) |

Table 14

| Exp. No. | Results after 100th polymerization batch | | | |
|---|---|---|---|---|
| | Scale amount ($g/m^2$) | | Number of fish eyes | Luminosity index (L) |
| | Liquid phase | Around interface of gas-liquid phases | | |
| 401 | 0 | 21 | 7 | 72.7 |
| 402 | 0 | 23 | 8 | 72.5 |
| 403 | 0 | 26 | 8 | 72.5 |
| 404 | 0 | 25 | 7 | 72.6 |
| 405 | 0 | 30 | 9 | 72.5 |
| 406 | 0 | 28 | 8 | 72.5 |
| 407 | 0 | 22 | 7 | 72.4 |
| 408 | 0 | 23 | 7 | 72.5 |
| 409 | 0 | 26 | 8 | 72.5 |
| 410 | 0 | 32 | 9 | 72.5 |
| 411 | 0 | 62 | 22 | 72.5 |
| 412 | 0 | 81 | 24 | 72.5 |
| 413 | 0 | 75 | 24 | 72.5 |
| 414 | 0 | 78 | 23 | 72.6 |
| 415 | 0 | 120 | 58 | 72.6 |

Example 5 (Experiment Nos. 501 to 515.)

In each experiment, polymerization was conducted using a stainless steel polymerization vessel with an inner capacity of 1,000 litters and having a stirrer, as described below.

A coating liquid used in each experiment was prepared as follows: the solution of a condensation product obtained in Production Example 3 was added with a solvent so that the solvent composition and the concentration of the condensation product in the resulting liquid might become the values shown in the Table 15. The pH of the liquid mixture was adjusted to the pH value shown in the Table 15 by addition of a pH adjustor. The number of condensation product and the pH adjustor used in each experiment are shown in the Table 15. The coating liquid thus obtained was applied to the inner wall, the stirring shaft, the stirring blades and other areas with which a monomer comes into contact of the polymerization vessel. The applied coating liquid was dried by heating at 40°C for 15 minutes to form a coating, which was then washed with water.

Thereafter, into the polymerization vessel in which the coating was formed as above, polymerization was conducted in the same manner as in Example 2. After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 50 times. After the 50th batch, the amount of polymer scale on an area located in the liquid during polymerization and on an area in the vicinity of the interface between the gas and liquid phases, was measured in the same manner as in Example 1. The results are given in Table 16.

The number of fish eyes which may appear when a polymer is formed into sheet, and luminosity index L were measured with respect to the polymers produced in the experiments in the same manner as in Example 2. The results are given in Table 16.

Table 15

| Exp. No. | Coating liquid | | | | |
|---|---|---|---|---|---|
| | Condensation product No. | Concentration (Wt.%) | pH adjuster | pH | Solvent (weight ratio) |
| 501 | 31 | 0.3 | Triethanolamine | 10.0 | Water:Methanol(70:30) |
| 502 | 32 | 0.3 | Triethanolamine | 10.0 | Water:Methanol(70:30) |
| 503 | 33 | 0.2 | Triethanolamine | 10.0 | Water:Methanol(70:30) |
| 504 | 34 | 0.05 | Triethanolamine | 10.0 | Water:Methanol(50:50) |
| 505 | 35 | 0.3 | NaOH | 11.0 | Water:Methanol(90:10) |
| 506 | 36 | 0.3 | Monoethanolamine | 11.0 | Water:Methanol(10:90) |
| 507 | 37 | 0.3 | Triethanolamine | 9.5 | Water:Methanol(80:20) |
| 508 | 38 | 0.3 | Triethanolamine | 9.5 | Water:Methanol(80:20) |
| 509 | 39 | 0.3 | Triethanolamine | 9.5 | Water:Methanol(80:20) |
| 510 | 40 | 0.5 | Triethanolamine | 8.5 | Water:Methanol(50:50) |
| 511 | 41 | 0.2 | Triethanolamine | 10.0 | Water:Methanol(80:20) |
| 512 | 42 | 0.2 | Triethanolamine | 8.0 | Water:Methanol(80:20) |
| 513 | 43 | 0.3 | Triethanolamine | 11.0 | Water:Methanol(70:30) |
| 514 | 44 | 0.3 | Triethanolamine | 10.0 | Water:Methanol(70:30) |
| 515 | 45 | 0.3 | Triethanolamine | 10.0 | Water:Methanol(70:30) |

Table 16

| Exp. No. | Results after 50th polymerization batch | | |
|---|---|---|---|
| | Scale amount ($g/m^2$) | | Luminosity index (L) |
| | Liquid phase | Around interface of gas-liquid phases | |
| 501 | 0 | 20 | 85.6 |
| 502 | 1 | 35 | 85.6 |
| 503 | 2 | 41 | 85.6 |
| 504 | 3 | 74 | 85.7 |
| 505 | 1 | 33 | 85.6 |
| 506 | 1 | 46 | 85.6 |
| 507 | 1 | 32 | 85.6 |
| 508 | 1 | 37 | 85.6 |
| 509 | 1 | 39 | 85.6 |
| 510 | 0 | 28 | 85.5 |
| 511 | 8 | 72 | 85.6 |
| 512 | 9 | 75 | 85.6 |
| 513 | 7 | 68 | 85.5 |
| 514 | 8 | 77 | 85.5 |
| 515 | 19 | 420 | 85.5 |

Example 6 (Experiment Nos. 601 to 611.)

In each experiment, polymerization was conducted using a stainless steel polymerization vessel with an inner capacity of 1,000 litters and having a stirrer, as described below.

A condensation product, a water-soluble polymeric compound(E), a colloidal silica and/or alkali metal silicate (F), a solvent and a pH adjustor used in each experiment are shown in Table 17. The colloidal silicas ( a to e in Tables 17, 20, 22 and 24) used in Example 6 and Examples 7 to 9 below are as shown in Table 19. A coating liquid used in each experiment was prepared as follows: the solution containing a condensation product and resulting from the production example was added with components (E) and (F) and a solvent so that the composition and the concentration of the condensation product in the resulting liquid might become the values shown in the Table 17. The pH of the liquid mixture was adjusted to the pH value shown in the Table 17 by addition of a pH adjustor. The coating liquid thus obtained was applied to the inner wall, the stirring shaft, the stirring blades and other areas with which a monomer comes into contact of

the polymerization vessel. The applied coating liquid was dried by heating at 40 ° C for 15 minutes to form a coating, which was then washed with water.

Thereafter, into the polymerization vessel in which the coating was formed as above, polymerization was conducted in the same manner as in Example 1. After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 100 times. After the 100th batch, the amount of polymer scale on an area located in the liquid during polymerization and on an area in the vicinity of the interface between the gas and liquid phases, was measured in the same manner as Example 1. The results are given in Table 18.

The number of fish eyes which may appear when a polymer is formed into sheet, and luminosity index L were measured with respect to the polymers produced in the experiments in the same manner as Example 1. The results are given in Table 18.

Table 17

| Exp. No. | Coating liquid | | | | | | |
|---|---|---|---|---|---|---|---|
| | (G) Conden-sation Product No. | (E) Water-soluble polymeric compound | (F) Colloidal silica and/or alkali metal silicate | Total concent-ration of (G)+(E)+(F) (wt.%) | (G):(E):(F) (weight ratio) | pH adjuster (pH) | Solvent (weight ratio) |
| 601 | 19 | Gelatin | a | 0.5 | 100:100:100 | NaOH (9.5) | Water:Methanol (90:10) |
| 602 | 21 | Gelatin | c | 0.5 | 100:100:200 | NaOH (9.5) | Water:Methanol (90:10) |
| 603 | 22 | Gelatin | b | 0.5 | 100:100:200 | NaOH (9.5) | Water:Methanol (90:10) |
| 604 | 23 | Polyacrylate | b | 0.5 | 100: 50:200 | NaOH (9.5) | Water:Methanol (90:10) |
| 605 | 24 | Polyacrylate | a | 0.5 | 100: 50:200 | NaOH (9.5) | Water:Methanol (90:10) |
| 606 | 25 | Polyacrylate | b | 0.5 | 100:200:300 | NaOH (9.0) | Water:Methanol (80:20) |
| 607 | 26 | Polystyrene-sulfonic acid | b | 0.5 | 100:300:300 | NaOH (9.0) | Water:Methanol (80:20) |
| 608 | 27 | Polyvinyl pyrrolidone | b | 0.5 | 100: 40:100 | NaOH (9.0) | Water:Methanol (80:20) |
| 609 | 28 | Polyvinyl pyrrolidone | b | 0.5 | 100: 20:100 | NaOH (9.5) | Water:Methanol (95:5) |
| 610 | 29 | Polyvinyl pyrrolidone | Sodium metasilicate | 0.5 | 100:100: 50 | NaOH (9.5) | Water:Methanol (95:5) |
| 611 | 30 | Polyvinyl pyrrolidone | b | 0.5 | 100:100:200 | NaOH (9.5) | Water:Methanol (95:5) |

Table 18

| Exp. No. | Results after 100th polymerization batch | | | |
|---|---|---|---|---|
| | Scale amount ($g/m^2$) | | Number of fish eyes | Luminosity index (L) |
| | Liquid phase | Around interface of gas-liquid phases | | |
| 601 | 0 | 3 | 6 | 72.7 |
| 602 | 0 | 5 | 6 | 72.5 |
| 603 | 0 | 4 | 7 | 72.4 |
| 604 | 0 | 5 | 7 | 72.6 |
| 605 | 0 | 3 | 6 | 72.5 |
| 606 | 0 | 5 | 6 | 72.7 |
| 607 | 0 | 3 | 7 | 72.5 |
| 608 | 0 | 6 | 7 | 72.3 |
| 609 | 0 | 4 | 7 | 72.4 |
| 610 | 0 | 5 | 7 | 72.7 |
| 611 | 0 | 4 | 7 | 72.6 |

Table 19

| Colloidal silica | Particle diameter of colloid particles | Remarks *1 |
|---|---|---|
| a | 5 - 7 µm | Snowtex CXS-9 *2 |
| b | 7 - 9 µm | Snowtex S *2 |
| c | 10 - 20 µm | Snowtex O *2 |
| d | 10 - 20 µm | Methanol silica sol |
| e | 10 - 20 µm | Ethylene glycol silica sol |

*1 All the products are produced by Nissan Chemical Industries, Ltd.
*2 Tradenames

Example 7 (Experiment Nos. 701 to 711.)

In each experiment, the polymerization batch as specified in Example 6 was conducted except that a coating liquid shown in Table 20 was used and the polymerization batch was repeated 150 times. Each polymerization batch was conducted in the same manner as in Example 6. After the 150 batch, the amount of polymer scale, the number of fish eyes in a formed sheet, and luminosity index L were measured in the same manner as in Example 1.

The results are given in Table 21.

Table 20

| Exp. No. | Coating liquid | | | | | | |
|---|---|---|---|---|---|---|---|
| | (G) Condensation Product No. | (E) Water-soluble polymeric compound | (F) Colloidal silica and/or alkali metal silicate | Total concentration of (G)+(E)+(F) (wt.%) | (G):(E):(F) (weight ratio) | pH adjuster (pH) | Solvent (weight ratio) |
| 701 | 19 | Gelatin | a | 0.5 | 100:100:100 | NaOH (9.5) | Water:Methanol (90:10) |
| 702 | 21 | Gelatin | c | 0.5 | 100:100:200 | NaOH (9.5) | Water:Methanol (90:10) |
| 703 | 24 | Polyvinyl pyrrolidone | c | 0.5 | 100:100: 50 | NaOH (9.5) | Water:Methanol (95:5) |
| 704 | 31 | Casein | a | 0.5 | 100:100:100 | NaOH (9.5) | Water:Methanol (90:10) |
| 705 | 32 | Casein | a | 0.5 | 100:100:200 | NaOH (9.5) | Water:Methanol (90:10) |
| 706 | 33 | Polyvinyl alcohol | b | 0.5 | 100: 50:100 | NaOH (9.5) | Water:Methanol (90:10) |
| 707 | 34 | Gelatin | b | 1.0 | 100: 50:200 | KOH (10.0) | Water:Methanol (90:10) |
| 708 | 35 | Carboxymethyl cellulose | c | 1.0 | 100:200:400 | Ethylenediamine (11.0) | Water:Methanol (90:10) |
| 709 | 36 | Hydroxyethyl cellulose | c | 0.3 | 100:200:200 | KOH (11.0) | Water:Methanol (90:10) |
| 710 | 37 | Gelatin | c | 0.3 | 100:100:100 | NaOH (12.0) | Water:Methanol (90:10) |
| 711 | 38 | Gelatin | d | 0.3 | 100:100:100 | NaOH (9.5) | Water:Methanol (90:10) |

Table 21

| Exp. No. | Results after 150th polymerization batch | | | |
|---|---|---|---|---|
| | Scale amount ($g/m^2$) | | Number of fish eyes | Luminosity index (L) |
| | Liquid phase | Around interface of gas-liquid phases | | |
| 701 | 0 | 87 | 33 | 72.6 |
| 702 | 0 | 92 | 35 | 72.7 |
| 703 | 0 | 78 | 31 | 72.6 |
| 704 | 0 | 2 | 4 | 72.4 |
| 705 | 0 | 4 | 4 | 72.5 |
| 706 | 0 | 6 | 6 | 72.5 |
| 707 | 0 | 3 | 4 | 72.7 |
| 708 | 0 | 5 | 5 | 72.6 |
| 709 | 0 | 4 | 6 | 72.6 |
| 710 | 0 | 5 | 5 | 72.7 |
| 711 | 0 | 5 | 6 | 72.7 |

Example 8 (Experiment Nos. 801 to 811.)

In each experiment, polymerization was conducted using a stainless steel polymerization vessel with an inner capacity of 1,000 litters and having a stirrer, as described below.

A condensation product, a water-soluble polymeric compound (E), a colloidal silica and/or alkali metal silicate (F), a solvent and a pH adjustor used in each experiment are shown in Table 22. A coating liquid used in each experiment was prepared as follows: the solution of a condensation product resulting from production example was added with components (E) and (F) and a solvent so that the composition and the concentration of the condensation product in the resulting liquid might become the values shown in the Table 22. The pH of the liquid mixture was adjusted to the pH value shown in the Table 22 by addition of a pH adjustor. The coating liquid thus obtained was applied to the inner wall, the stirring shaft, the stirring blades and other areas with which a monomer comes into contact of the polymerization vessel. The applied coating liquid was dried by heating at 40°C for 15 minutes to form a coating, which was then washed with water.

Thereafter, into the polymerization vessel in which the coating was formed as above, polymerization was conducted in the same manner as in Example 2. After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 50 times. After the 50th batch, the amount of polymer scale on an area located in the liquid during polymerization and on an area in the vicinity of the interface between the gas and liquid

phases, was measured in the same manner as Example 1. The results are given in Table 23.

The luminosity index L when a polymer is formed into sheet was measured with respect to the polymers produced in the experiments in the same manner as Example 2. The results are given in Table 23.

Table 22

| Exp. No. | Coating liquid | | | | | | |
|---|---|---|---|---|---|---|---|
| | (G) Condensation Product No. | (E) Water-soluble polymeric compound | (F) Colloidal silica and/or alkali metal silicate | Total concentration of (G)+(E)+(F) (wt.%) | (G):(E):(F) (weight ratio) | pH adjuster (pH) | Solvent (weight ratio) |
| 801 | 19 | Polyacrylate | a | 0.5 | 100:100:200 | NaOH (9.5) | Water:Methanol (90:10) |
| 802 | 21 | Polyacrylate | c | 0.5 | 100: 50:100 | KOH (9.5) | Water:Methanol (95:5) |
| 803 | 22 | Polyacrylate | b | 0.5 | 100:100:100 | Monoethanolamine (9.5) | Water:Methanol (95:5) |
| 804 | 23 | Polyvinyl pyrrolidone | a | 0.5 | 100:100:100 | Triethanolamine (9.5) | Water:Methanol (95:5) |
| 805 | 24 | Polyvinyl pyrrolidone | a | 0.5 | 100: 50:200 | NaOH (9.5) | Water:Methanol (80:20) |
| 806 | 25 | Polyvinyl pyrrolidone | c | 0.5 | 100:200:300 | NaOH (11.0) | Water:Methanol (80:20) |
| 807 | 26 | Polyvinyl alcohol | c | 0.5 | 100:100:500 | NaOH (11.0) | Water:Methanol (80:20) |
| 808 | 27 | Gelatin | a | 0.5 | 100:100:200 | NaOH (12.0) | Water:Methanol (80:20) |
| 809 | 28 | Casein | Sodium metasilicate | 0.5 | 100:100: 50 | KOH (12.0) | Water:Methanol (95:5) |
| 810 | 29 | Carboxymethyl cellulose | a | 0.5 | 100:150: 50 | NaOH (10.0) | Water:Methanol (95:5) |
| 811 | 30 | Sodium alginate | a | 0.5 | 100: 50:100 | NaOH (10.0) | Water:Methanol (95:5) |

Table 23

| Exp. No. | Results after 50th polymerization batch | | |
|---|---|---|---|
| | Scale amount ($g/m^2$) | | Luminosity index (L) |
| | Liquid phase | Around interface of gas-liquid phases | |
| 801 | 0 | 4 | 85.7 |
| 802 | 0 | 5 | 85.7 |
| 803 | 0 | 4 | 85.6 |
| 804 | 0 | 6 | 85.5 |
| 805 | 0 | 7 | 85.5 |
| 806 | 0 | 4 | 85.6 |
| 807 | 0 | 7 | 85.6 |
| 808 | 0 | 8 | 85.6 |
| 809 | 0 | 4 | 85.7 |
| 810 | 0 | 5 | 85.6 |
| 811 | 0 | 7 | 85.7 |

Example 9 (Experiment Nos. 901 to 911.)

In each experiment the polymerization batch as specified in Example 8 was conducted, except that a coating liquid shown in Table 24 was used and the polymerization batch was repeated 80 times. Each polymerization batch was conducted in the same manner as in Example 8. After the 80 batch, the amount of polymer scale, the number of fish eyes in a formed sheet, and luminosity index L were measured in the same manner as in Example 8.

The results are given in Table 25.

Table 24

| Exp. No. | Coating liquid | | | | | | |
|---|---|---|---|---|---|---|---|
| | (G) Conden-sation Product No. | (E) Water-soluble polymeric compound | (F) Colloidal silica and/or alkali metal silicate | Total concent-ration of (G)+(E)+(F) (wt.%) | (G):(E):(F) (weight ratio) | pH adjuster (pH) | Solvent (weight ratio) |
| 901 | 19 | Polyacrylate | a | 0.5 | 100:100:200 | NaOH (9.5) | Water:Methanol (90:10) |
| 902 | 21 | Polyacrylate | c | 0.5 | 100: 50:100 | KOH (9.5) | Water:Methanol (95:5) |
| 903 | 24 | Carboxymethyl cellulose | a | 0.5 | 100: 50: 50 | NaOH (10.0) | Water:Methanol (95:5) |
| 904 | 31 | Hydroxyethyl cellulose | a | 0.5 | 100:100:200 | NaOH (9.5) | Water:Methanol (90:10) |
| 905 | 32 | Pectin | d | 0.3 | 100:100:200 | KOH (9.5) | Water:Methanol (95:5) |
| 906 | 33 | Polyacrylate | e | 0.3 | 100: 50:100 | Triethanol-amine (10.0) | Water:Methanol (80:20) |
| 907 | 34 | Polyacrylate | Sodium orthosilicate | 0.5 | 100: 50:100 | NaOH (10.0) | Water:Methanol (90:10) |
| 908 | 35 | Polyacrylate | c | 1.0 | 100: 50:300 | NaOH (9.5) | Water:Methanol (90:10) |
| 909 | 36 | Polyacrylate | c | 0.5 | 100:100:500 | NaOH (9.5) | Water:Methanol (90:10) |
| 910 | 37 | Polyacrylate | c | 0.5 | 100:100:250 | NaOH (8.5) | Water:Methanol (90:10) |
| 911 | 38 | Gelatin | a | 0.5 | 50: 50:200 | NaOH (8.5) | Water:Methanol (90:10) |

Table 25

| Exp. No. | Results after 80th polymerization batch | | |
|---|---|---|---|
| | Scale amount ($g/m^2$) | | Luminosity index (L) |
| | Liquid phase | Around interface of gas-liquid phases | |
| 901 | 0 | 84 | 85.6 |
| 902 | 0 | 85 | 85.5 |
| 903 | 0 | 88 | 85.5 |
| 904 | 0 | 3 | 85.6 |
| 905 | 0 | 5 | 85.7 |
| 906 | 0 | 4 | 85.7 |
| 907 | 0 | 3 | 85.7 |
| 908 | 0 | 3 | 85.6 |
| 909 | 0 | 5 | 85.7 |
| 910 | 0 | 4 | 85.7 |
| 911 | 0 | 7 | 85.7 |

Example 10

Polymerization was conducted using a stainless steel polymerization vessel with an inner capacity of 1, 000 litters and having a stirrer, as described below.

The coating liquid used in Experiment No. 901 was applied to the inner wall, the stirring shaft, the stirring blades and other areas with which a monomer comes into contact of the polymerization vessel. The applied coating liquid was dried by heating at 50°C for 10 minutes to form a coating, which was then washed with water.

Thereafter, into the polymerization vessel in which the coating was formed as above, 400kg of water, 260 kg of styrene, 140 kg of acrylonitrile, 400 g of a partially saponified polyacrylamide and 1.2 kg of α,α'-azobisisobutyronitrile were charged, followed by polymerization with stirring at 90°C for 5 hours. After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 80 times. After the 80th batch, the amount of polymer scale on an area located in the liquid during polymerization and on an area in the vicinity of the interface between the gas and liquid phases, was measured in the same manner as Example 1. As the result, the amount of polymer scale on an area located in the liquid during polymerization was 0 $g/m^2$, the amount of polymer scale on an area in the vicinity of the interface between the gas and liquid phases was 72 $g/m^2$.

Example 11

Polymerization was conducted using a stainless steel polymerization vessel with an inner capacity of 20 litters and having a stirrer, as described below.

The coating liquid used in Experiment No. 901 was applied to the inner wall, the stirring shaft, the stirring blades and other areas with which a monomer comes into contact of the polymerization vessel. The applied coating liquid was dried by heating at 50°C for 10 minutes to form a coating, which was then washed with water.

Thereafter, into the polymerization vessel in which the coating was formed as above, 9.5 kg of water, 240 g of sodium dodecylbenzenesulfanate, 15 g of t-dodecyl mercaptan, 2.1 kg of butadiene, 2.8 g of methyl methacrylate, 320 g of styrene and 16 g of potassium persulfate were charged, followed by polymerization with stirring at 60°C for 10 hours.

After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 80 times. After the 80th batch, the amount of polymer scale on an area located in the liquid during polymerization and on an area in the vicinity of the interface between the gas and liquid phases, was measured in the same manner as in Example 1. As the result, the amount of polymer scale on an area located in the liquid during polymerization was 0 $g/m^2$, the amount of polymer scale on an area in the vicinity of the interface between the gas and liquid phases was 42 $g/m^2$.

Example 12

Polymerization was conducted using a stainless steel polymerization vessel with an inner capacity of 100 litters and having a stirrer, as described below.

The coating liquid used in Experiment No. 904 was applied to the inner wall, the stirring shaft, the stirring blades and other areas with which a monomer comes into contact of the polymerization vessel. The applied coating liquid was dried by heating at 50°C for 15 minutes to form a coating, which was then washed with water.

Thereafter, into the polymerization vessel in which the coating was formed as above, 40 kg of water, 500 g of disproportionated potassium rhodinate, 13 kg of polybutadiene latex (solid content: 45%), 9 kg of styrene monomer, 5 kg of acrylonitrile monomer, 40 g of t-dodecyl mercaptan and 140 g of cumene hydroperoxide were charged, and further 200 g of dextrose, 2 g of ferrous sulfate and 100 g of sodium pyrophosphate were charged at 47°C in the polymerization vessel, followed by polymerization with stirring at 65°C for 4 hours.

After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 80 times. After the 80th batch, the amount of polymer scale on an area located in the liquid during polymerization and on an area in the vicinity of the interface between the gas and liquid phases, was measured in the same manner as in Example 1. As the result, the amount of polymer scale on an area located in the liquid during polymerization was 0 $g/m^2$, he amount of polymer scale on an area in the vicinity of the interface between the gas and liquid phases was 58 $g/m^2$.

Example 13

Polymerization was conducted using a stainless steel polymerization vessel with an inner capacity of 20 litters and having a stirrer, as described below.

The coating liquid used in Experiment No. 905 was applied to the inner wall, the stirring shaft, the stirring blades and other areas with which a monomer comes into contact of the polymerization vessel. The applied coating liquid was dried by heating at 50°C for 15 minutes to form a coating, which was then washed with water.

Thereafter, into the polymerization vessel in which the coating was formed as above, 4.0 kg of water and 6 g of sodium dodecylbenzenesulfonate were charged, followed by heating up to 60°C with stirring. After the gas phase section in the vessel was replaced with nitrogen gas, 94 g of n-butyl acrylate, 220 g of methyl methacrylate, 5 g of acrylic acid and 5 g of methacrylic acid were charged, and subsequently 1 g of

ammonium persulfate and 1 g of sodium hydrosulfite were charged, followed by stirring at 60° C for 20 minutes.

Further, a mixed monomer (a mixture of 2.1 kg of n-buthl acrylate, 4.8 kg of methyl methacrylate, 100 g of acrylic acid and 100 g of methacrylic acid), 500 g of 1 % by weight aqueous solution of ammonium persulfate, 500 g of 1 % by weight aqueous solution of sodium hydrosulfite, and 2.0 kg of 25 % by weight aqueous solution of polyoxyethylene nonylphenyl ether were added at a constant rate in the polymerization vessel over 3 hours. After completion of the addition the polymerization vessel was heated up to 70° C, and polymerization was carried out at 70° C for 2 hours.

After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 80 times. After the 80th batch, the amount of polymer scale on an area located in the liquid during polymerization and on an area in the vicinity of the interface between the gas and liquid phases, was measured in the same manner as Example 1. As the result, the amount of polymer scale on an area located in the liquid during polymerization was 0 g/m$^2$, the amount of polymer scale on an area in the vicinity of the interface between the gas and liquid phases was 72 g/m$^2$.

Example 14

Polymerization was conducted using a stainless steel polymerization vessel with an inner capacity of 20 litters and having a stirrer, as described below.

The coating liquid used in Experiment No. 906 was applied to the inner wall, the stirring shaft, the stirring blades and other areas with which a monomer comes into contact of the polymerization vessel. The applied coating liquid was dried by heating at 60° C for 10 minutes to form a coating, which was then washed with water.

Thereafter, into the polymerization vessel in which the coating was formed as above, 4.5 kg of water, 312 g of a completely saponified polyvinyl alchol and 6 g of sodium carbonate were charged, followed by heating up to 65° C with stirring. Subsequently, 550 g of vinyl acetate and 550 g of 1 % by weight aqueous ammonium persulfate solution were charged, thereafter, 5.0 kg of vinyl acetate and 1.0 kg of 1 % by weight aqueous ammonium persulfate solution were added in the vessel at a constant rate over 4 hours. After completion of the addition of the vinyl acetate and the ammonium persulfate, the inside of the polymerization vessel was heated up to 90° C, and polymerization was carried out at 90° C for 2 hours.

After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 100 times. After the 100th batch, the amount of polymer scale on an area located in the liquid during polymerization and on an area in the vicinity of the interface between the gas and liquid phases, was measured in the same manner as Example 1. As the result, the amount of polymer scale on an area located in the liquid during polymerization was 0 g/m$^2$, he amount of polymer scale on an area in the vicinity of the interface between the gas and liquid phases was 45 g/m$^2$.

Example 15

Polymerization was conducted using a stainless steel polymerization vessel with an inner capacity of 20 litters and having a stirrer, as described below.

The coating liquid used in Experiment No. 906 was applied to the inner wall, the stirring shaft, the stirring blades and other areas with which a monomer comes into contact of the polymerization vessel. The applied coating liquid was dried by heating at 50° C for 20 minutes to form a coating, which was then washed with water.

Thereafter, into the polymerization vessel in which the coating was formed as above, 7.0 kg of water, 430 g of a partially saponified polyvinyl alchol, 7 g of sodium pyrophosphate and 7 g of sodium hydrosulfite were charged, followed by heating up to 50° C. After replacing the gas of the gas phase in the polymerization vessel with nitrogen gas, the vessel was heated up to 70° C and charged with ethylene up to an internal pressure of 14 kg/cm$^2$•G. Subsequently, 6.0 kg of vinyl acetate and 1.0 kg of 2 % by weight aqueous ammonium persulfate solution were added at a constant rate in the polymerization vessel over 4 hours. After completion of the addition of the vinyl acetate and the ammonium persulfate, the polymerization

vessel was heated up to 80 ° C, and polymerization was carried out at 80 ° C for 3 hours.

After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 80 times. After the 80th batch, the amount of polymer scale on an area located in the liquid during polymerization and on an area in the vicinity of the interface between the gas and liquid phases, was measured in the same manner as in Example 1. As the result, the amount of polymer scale on an area located in the liquid during polymerization was 0 $g/m^2$, the amount of polymer scale on an area in the vicinity of the interface between the gas and liquid phases was 58 $g/m^2$.

Example 16

Polymerization was conducted using a stainless steel polymerization vessel with an inner capacity of 20 litters and having a stirrer, as described below.

The coating liquid used in Experiment No. 909 was applied to the inner wall, the stirring shaft, the stirring blades and other areas with which a monomer comes into contact of the polymerization vessel. The applied coating liquid was dried by heating at 60 ° C for 20 minutes to form a coating, which was then washed with water.

Thereafter, into the polymerization vessel in which the coating was formed as above, an aqueous solution prepared by dissolving 1.2 kg of polyvinyl alchol with a saponification degree of 99.4 mole % and a polymerization degree of 2250 in 15 litters of water was charged. To the aqueous solution under stirring, 1 kg of 35 % concentrated hydrochloric acid was added. Ten minutes after the addition, 800 g of butyl aldehyde was added thereto dropwise over 15 minutes. Then, the polymerization vessel was heated up to 60 ° C, reaction was carried out at 60 ° C for 3 hours.

After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 80 times. After the 80th batch, the amount of polymer scale on an area located in the liquid phase during polymerization and on an area in the vicinity of the interface between the gas and liquid phases, was measured in the same manner as Example 1. As the result, the amount of polymer scale on an area located in the liquid during polymerization was 0 $g/m^2$, he amount of polymer scale on an area in the vicinity of the interface between the gas and liquid phases was 82 $g/m^2$.

Example 17

1)Preparation of prepolymer

A prepolymer for use in this example was prepared as below.

A polymerization vessel was charged with 6,000 g of styrene monomer, 720 g of a polybutadiene rubber, 480 g of a mineral oil (tradename: CP-50, product of Idemitsu Kosan K.K.) and 6,000 g of n-dodecyl mercaptan, and they were allowed to react at 115 ° C for 5 hours to produce a prepolymer.

2) Polymerization

Polymerization was conducted using a stainless steel polymerization vessel with an inner capacity of 20 liters and having a stirrer, as described below.

The coating liquid used in Experiment No. 901 was applied to the inner wall, the stirring shaft, the stirring blades and other areas with which a monomer comes into contact of the polymerization vessel. The applied coating liquid was dried by heating at 60 ° C for 10 minutes to form a coating, which was then washed with water.

Thereafter, in the polymerization vessel in which the coating was formed as above, 7,000 g of water, 7,000 g of the prepolymer prepared above, 70 g of hydroxyapatite, 0.14 g of sodium dodecylbenzenesulfonate, 17.5 g of benzoyl peroxide and 10.5 g of t-butyl perbenzoate were charged. Subsequently, reaction was carried out at 92 ° C for 3.5 hours, and then reaction was carried out at 135 ° C for 1 hour, to produce a polymer.

After the completion of the polymerization, the produced polymer was taken out and unreacted monomer was recovered out of the polymerization vessel. Subsequently, the inside of the polymerization vessel was washed with water and residual resin was removed.

The batch above comprising the operations from forming a coating through polymerizing to washing with water was repeated 80 times. After the 80th batch, amount of polymer scale was measured in the same manner as in Example 1. As the result, the amount of polymer scale on an area located in the liquid during polymerization was measured to be 0 g/$m^2$, and the amount of polymer scale on an area in the vicinity of the interface between the gas and liquid phases was measured to be 32 g/$m^2$.

## Claims

**1.** A polymer scale preventive agent for use in polymerization of a monomer having an ethylenically unsaturated double bond, comprising a condensation product obtained by condensing reactants comprising:
(A) an aromatic amine compound, and
(B) an aromatic nitro compound
in an organic solvent-based medium.

**2.** The polymer scale preventive agent according to Claim 1, wherein the component (A) comprises at least one compound selected from the group consisting of the aromatic amine compounds represented by the general formulas (1), (2) and (3):

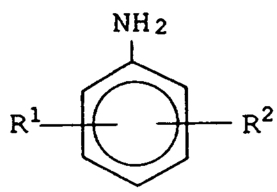

(1)

wherein $R^1$ stands for -H, $-NH_2$, -Cl, -OH, $-NO_2$, $-COCH_3$, - $OCH_3$, $-N(CH_3)_2$ or an alkyl group having 1 to 3 carbon atoms, and $R^2$ stands for -H, $-NH_2$, -OH, $-CH_3$, -COOH or - $SO_3H$;

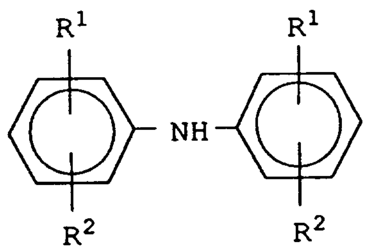

(2)

wherein the two $R^1$ may be the same or different and are each as defined above, and the two $R^2$ may be the same or different and are each as defined above; and

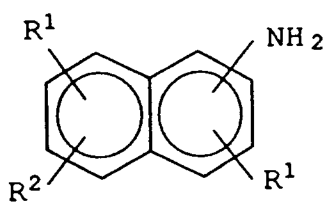

(3)

wherein the two $R^1$ may be the same or different and are each as defined above, and $R^2$ is as defined above.

3. The polymer scale preventive agent according to Claim 1 or 2, wherein the component (B) comprises an aromatic nitro compound represented by the formula (4):

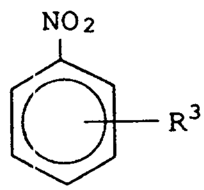

(4)

wherein $R^3$ stands for -H, -OH, $-OCH_3$, $-OC_2H_5$, -Cl, -COOH or $-SO_3H$.

4. The polymer scale preventive agent according to Claim 1, 2 or 3 wherein the amount of the component (B) is in the range of 0.01 to 1.50 parts by weight per part by weight of the component (A).

5. The polymer scale preventive agent according to any one of Claims 1 to 4, wherein said reactants further comprises (C) an aromatic hydroxy compound.

6. The polymer scale preventive agent according to Claim 5, wherein the component (C) comprises at least one compound selected from the group consisting of the aromatic hydroxy compounds represented by the general formulas (5) and (6):

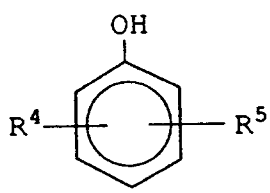

(5)

wherein $R^4$ stands for -H, -Cl, -OH, $-COCH_3$, $-OCH_3$, -COOH, $-SO_3H$ or an alkyl group having 1 to 3 carbon atoms, and $R^5$ stands for -H, -Cl, -OH, $-OCH_3$, $-OC_2H_4$ or -COOH; and

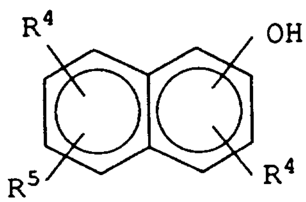

(6)

wherein the two $R^4$ may be the same or different and are each as defined above, and the $R^5$ is as defined above.

7. The polymer scale preventive agent according to Claim 5 or 6, wherein the amount of the component (C) is in the range of 0.05 to 20 parts by weight per part by weight of the component (A).

8. The polymer scale preventive agent according to any one of Claims 5 to 7, wherein the condensation product is obtained by a process in which the condensation reaction of the components (A) and (B) is first carried out and thereafter the component (C) is subjected to condensation reaction.

9. The polymer scale preventive agent according to Claim 8, wherein the component (C) begins to be added to the reaction mixture of the condensation of the components (A) and (B) when the condensation conversion of the component (A) and (B) reaches a value of 50 to 99% by weight.

**10.** The polymer scale preventive agent according to any one of Claims 1 to 9, wherein the condensation product of the components (A) and (B) is dissolved or dispersed in a solvent to form a liquid state.

**11.** The polymer scale preventive agent according to claim 10, wherein the concentration of the condensation product of the components (A) and (B) is in the range from 0.001 to 15% by weight.

**12.** The polymer scale preventive agent according to Claim 10 or 11, which further comprises (E) a water-soluble polymeric compound and/or (F) at least one compound selected from the group consisting of a colloidal silica and an alkali metal silicate.

**13.** The polymer scale preventive agent according to Claim 12, wherein the component (E) is present in an amount of 0.01 to 10 parts by weight and the component (F) is present in an amount of 0.01 to 10 parts by weight per part by weight of the condensation product of the components (A) and (B).

**14.** A polymerization vessel for use in polymerization of a monomer having an ethylenically unsaturated double bond, having on its inner wall surfaces a polymer scale preventive coating, wherein said coating comprises a condensation product obtained by condensing reactans comprising:
(A) an aromatic amine compound, and
(B) an aromatic nitro compound
in an organic solvent-based medium.

**15.** The polymerization vessel according to Claim 14, wherein said coating is further formed on the other areas than the inner wall with which the monomer comes into contact.

**16.** The polymerization vessel according to Claim 14 or 15, wherein said coating is further formed on the areas with which unreacted monomers come into contact of a system for recovering unreacted monomers.

**17.** The polymerization vessel according to any one of Claims 14 to 16, wherein the coating has a coating weight of 0.001 to 5 $g/m^2$.

**18.** A process of producing a polymer of an ethylenically unsaturated double bond, which comprises polymerizing the monomer in a polymerization vessel having a polymer scale preventive coating on its inner wall surfaces, wherein said coating comprises a condensation product obtained by condensing reactants comprising:
(A) an aromatic amine compound, and
(B) an aromatic nitro compound
in an organic solvent-based medium.

**19.** The process according to Claim 18, wherein said polymerization is conducted as suspension polymerization, emulsion polymerization, solution polymerization, bulk polymerization or gas phase polymerization.

**20.** The process according to Claim 18 or 19, wherein said monomer is selected from the group consisting of vinyl esters; vinyl halides; vinylidene halides; acrylic acid, methacrylic acid and their esters and salts; diene monomers; styrene; acrylonitrile; $\alpha$-methylstyrene; and vinyl ethers.

European Patent Office

# EUROPEAN SEARCH REPORT

Application Number

EP 92 11 7939

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 372 996 (SHIN-ETSU CHEMICAL COMPANY, LTD)<br>* the whole document * | 1-20 | C08F2/00 |
| X<br>Y | EP-A-0 372 967 (SHIN-ETSU CHEMICAL COMPANY, LTD)<br>* page 1, line 1 - page 9, line 30 *<br>* claims * | 1-11, 14-20<br>12,13 | |
| Y | EP-A-0 210 104 (SHIN-ETSU CHEMICAL COMPANY, LTD)<br>* page 6, line 6 - page 7, line 3 *<br>* claims * | 12,13 | |
| D,X | EP-A-0 062 230 (SHIN-ETSU CHEMICAL COMPANY, LTD)<br>& JP-A-60 030 681 (...)<br>* the whole document * | 1-4, 14-20 | |

TECHNICAL FIELDS SEARCHED (Int. Cl.5 )

C23F
C08F
C08G

The present search report has been drawn up for all claims

| Place of search | Date of completion of the search | Examiner |
|---|---|---|
| THE HAGUE | 25 JANUARY 1993 | KAUMANN, E.K-H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)